# EUROPÄISCHE PATENTSCHRIFT

(11) **EP 1 272 033 B1**
(45) Veröffentlichungstag und Bekanntmachung des Hinweises auf die Patenterteilung: **09.06.2004**
(21) Anmeldenummer: 01931513.4
(22) Anmeldetag: 12.03.2001
(51) Int. Cl.: A01N 25/04, A01N 25/02, A01N 43/84

(54) **AGROTECHNISCHE FORMULIERUNG**
AGROTECHNICAL FORMULATION
FORMULATION AGROTECHNIQUE

(30) Priorität: 13.03.2000 DE 10012161
(43) Veröffentlichungstag der Anmeldung: 08.01.2003
(73) Patentinhaber: BASF AKTIENGESELLSCHAFT, 67056 Ludwigshafen (DE)
(72) Erfinder: KOBER, Reiner, 67136 Fussgönheim (DE); BRATZ, Matthias, 67117 Limburgerhof (DE); BERGHAUS, Rainer, 67346 Speyer (DE); BREITSCHEIDEL, Boris, 67117 Limburgerhof (DE)
(74) Vertreter: Riedl, Peter, Dr.
(86) Internationale Anmeldenummer: PCT/EP2001/002764
(87) Internationale Veröffentlichungsnummer: WO 2001/067860

(56) Entgegenhaltungen:
- EP-A- 0 579 052
- WO-A-99/32427
- DE-A- 19 701 123
- DATABASE WPI Section Ch, Week 199730 Derwent Publications Ltd., London, GB; Class E15, AN 1997-332769 XP002172787 & WO 97 21792 A (NEW JAPAN CHEM CO LTD), 19. Juni 1997 (1997-06-19)

## Beschreibung

Die vorliegende Erfindung betrifft eine agrotechnische Formulierung, die einen Cyclohexan-Polycarbonsäureester enthält.

Pflanzenbehandlungsmittel kommen in weit überwiegendem Maße als flüssige Formulierung zur Anwendung. Diese wird in der Regel als Konzentrat bereitgestellt, wobei das Konzentrat wirkungssteigernde Additive bereits enthalten kann (sog. "built-in"-Produkt). Alternativ gibt es Adjuvantien, die vor der Anwendung mit dem in separater Verpackung gelieferten Wirkstoff im Tankmix vermischt werden können ("stand-alone"-Produkt). Formulierungen dieser Art enthalten in der Regel eine Ölphase, in der häufig Ester von aliphatischen oder aromatischen Mono- oder Dicarbonsäuren zur Wirkungssteigerung oder Wirkungssicherung enthalten sind. So beschreibt die WO 95/01722 eine Formulierung, die neben Wasser und einem Pestizid ein Dispergiermittel, ein Netzmittel, ein Verdikkungsmittel und gegebenenfalls ein organisches Lösungsmittel enthält, wobei es sich bei dem Lösungsmittel unter anderem um Sojaöl oder Rapsöl handeln kann. Die WO 95/31898 beschreibt eine Öl-in-Wasser-Formulierung, die ein Lösungsmittel enthält, das ausgewählt ist unter aromatischen Mono- und Dicarbonsäureestern, wie Phthalsäureester, von pflanzlichen Ölen abgeleitete Fettester, und aliphatische Ester der Adipinsäure, Glutarsäure und Bernsteinsäure. Phthalsäureester besitzen östrogenähnliche Wirkung und es besteht der Verdacht, dass sie zur Entstehung von Tumoren führen können. Die DE 29 05 122 A offenbart flüssige, emulgierbare Herbizidformulierungen mit Linuron als Wirkstoff, die als kristallisationshemmende Bestandteile Phthalsäuredialkylester, Phthalsäurealkydharze, ölmodifizierte Phthalsäurealkydharze oder Terpenphenolharze enthalten. Die US 4,834,908 beschreibt ein Ölkonzentrat, das einen niedrigen Alkylester einer C₄-C₂₂-Fettsäure, ein anionisches Tensid und eine langkettige Carbonsäure enthält. Die SU 537 660 beschreibt ein synergistisch wirkendes Herbizidgemisch, das zum Versprühen spezielle Lösungsmittel, wie Dimethyl- oder Dibutylphthalat, enthalten kann.

Die DE 32 47 050 A beschreibt herbizide Mittel, die einen Wirkstoff und ein synthetisches-Spreitmittel enthalten, bei welchem es sich um einen Fettsäureester handeln kann. In der WO 92/06596 werden Pflanzenbehandlungsmittel beschrieben, bei denen die Aufnahme und der Transport des Wirkstoffs durch Verwendung eines Adjuvanz erhöht wird, bei dem es sich unter anderem um einen Fettsäureester handeln kann. Die EP 579 052 A beschreibt ein Pflanzenbehandlungsmittel, das unter anderem einen aliphatischen Dicarbonsäureester zur Verbesserung des Eindringvermögens in die Cuticula enthält.

Die DE 197 01 123 A beschreibt eine Mischung, die einen Dicarbonsäureester der Formel ROOC-A-COOR, worin R für eine C₁-C₂₀-Alkylgruppe und A für Alkyliden, Alkenyliden, Alkinyliden, Cycloalkyliden, Cycloalkenyliden oder Phenylen steht und ein Produkt enthält, das durch Reaktion eines Öls oder Fetts auf Basis eines Triglycerids von C₂-C₃₀-Carbonsäuren mit Ethylenoxid und/oder Propylenoxid in Gegenwart einer Base erhalten wird. Durch diese Mischung lassen sich die Aufwandmengen an Pflanzenschutzwirkstoffen verringern und/oder das Wirkungsspektrum der Pflanzenschutzwirkstoffe vergrößern.

Der vorliegenden Erfindung liegt die Aufgabe zugrunde, eine agrotechnische Formulierung zur Verfügung zu stellen, bei welcher die Aufwandmengen an Wirkstoff(en) und Formulierungshilfsmitteln verringert sind bzw. die Wirkung verbessert ist. Außerdem soll die Formulierung toxikologisch und ökologisch günstige Eigenschaften aufweisen.

Überraschenderweise wurde nun gefunden, dass diese Aufgabe bei Verwendung von Cyclohexanpolycarbonsäureestern in der Formulierung gelöst wird.

Die vorliegende Erfindung betrifft daher ein agrotechnisches Gemisch bzw. eine agrotechnische Formulierung, enthaltend:
a) 20 bis 97,9 Gew.-% mindestens eines Cyclohexancarbonsäureesters der Formel I 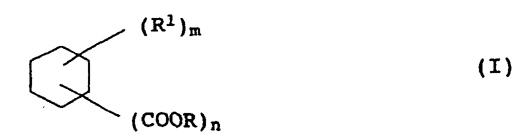 worin R¹ für C₁-C₁₀-Alkyl oder C₃-C₈-Cycloalkyl steht;
   m für 0, 1, 2 oder 3 steht;
   R für C₁-C₃₀-Alkyl steht; und
   n für 2, 3 oder 4 steht.
b) 0 bis 70 Gew.-% Wasser;
c) 0,1 bis 60 Gew.-% mindestens eines Hilfs- und/oder Zusatzstoffes; und
d) 2 is 70 Gew.-% mindestens eines Wirkstoffes zur Pflanzenbehandlung.
mit der Maßgabe, dass Produkte, die durch Reaktion eines Öls oder Fetts auf Basis eines Triglycerids von Carbonsäuren mit 2 bis 30 Kohlenstoffatomen mit Ethylenoxid und/oder Propylenoxid in Gegenwart von Basen erhältlich sind, nicht in der Formulierung enthalten sind.

Die C₁-C₁₀- bzw. C₁-C₃₀-Alkylgruppen können geradkettig oder verzweigt sein. Wenn R¹ für eine Alkylgruppe steht, handelt es sich vorzugsweise um eine C₁-C₈-Alkylgruppe und insbesondere C₁-C₆-Alkylgruppe. Beispiele für eine derartige Alkylgruppe sind Methyl, Ethyl, n-Propyl, i-Propyl, n-Butyl, i-Butyl, sek-Butyl, t-Butyl, n-Pentyl, n-Hexyl, n-Octyl, 2-Ethylhexyl, etc.

R steht vorzugsweise für C₂-C₂₀-Alkyl und insbesondere für C₃-C₁₈-Alkyl. Beispiele für derartige Alkylgruppen sind die oben für R¹ genannten Alkylgruppen sowie n-Nonyl, iso-Nonyl, n-Decyl, iso-Decyl, n-Undecyl, iso-Undecyl, n-Dodecyl, iso-Dodecyl, n-Tridecyl, iso-Tridecyl, Stearyl, n-Eicosyl, etc.

### Komponente a):

Beispiele für erfindungsgemäß brauchbare Cyclohexanpolycarbonsäureester sind
Cyclohexan-1,4-dicarbonsäurealkylester, wie z.B.
Cyclohexan-1,4-dicarbonsäuremonomethylester,
Cyclohexan-1,4-dicarbonsäuredimethylester,
Cyclohexan-1,4-dicarbonsäurediethylester,
Cyclohexan-1,4-dicarbonsäuredi-n-propylester,
Cyclohexan-1,4-dicarbonsäuredi-n-butylester,
Cyclohexan-1,4-dicarbonsäuredi-tert-butylester,
Cyclohexan-1,4-dicarbonsäurediisobutylester,
Cyclohexan-1,4-dicarbonsäuremonoglykolester,
Cyclohexan-1,4-dicarbonsäurediglykolester,
Cyclohexan-1,4-dicarbonsäuredi-n-octylester,
Cyclohexan-1,4-dicarbonsäurediisooctylester,
Cyclohexan-1,4-dicarbonsäuremono-2-ethylhexylester,
Cyclohexan-1,4-dicarbonsäuredi-2-ethylhexylester,
Cyclohexan-1,4-dicarbonsäuredi-n-nonylester,
Cyclohexan-1,4-dicarbonsäurediisononylester,
Cyclohexan-1,4-dicarbonsäuredi-n-decylester,
Cyclohexan-1,4-dicarbonsäuredi-n-undecylester,
Cyclohexan-1,4-dicarbonsäurediisodecylester,
Cyclohexan-1,4-dicarbonsäurediisododecylester,
Cyclohexan-1,4-dicarbonsäuredi-n-octadecylester,
Cyclohexan-1,4-dicarbonsäurediisooctadecylester,
Cyclohexan-1,4-dicarbonsäuredi-n-eicosylester,
Cyclohexan-1,4-dicarbonsäuremonocyclohexylester,
Cyclohexan-1,4-dicarbonsäuredicyclohexylester;

Cyclohexan-1,2-dicarbonsäurealkylester, wie z.B.
Cyclohexan-1,2-dicarbonsäuremonomethylester,
Cyclohexan-1,2-dicarbonsäuredimethylester,
Cyclohexan-1,2-dicarbonsäurediethylester,
Cyclohexan-1,2-dicarbonsäuredi-n-propylester,
Cyclohexan-1,2-dicarbonsäuredi-n-butylester,
Cyclohexan-1,2-dicarbonsäuredi-tert.-butylester,
Cyclohexan-1,2-dicarbonsäurediisobutylester,
Cyclohexan-1,2 -dicarbonsäuremonoglykolester,
Cyclohexan-1,2-dicarbonsäurediglykolester,
Cyclohexan-1,2-dicarbonsäuredi-n-octylester,
Cyclohexan-1,2-dicarbonsäurediisooctylester,
Cyclohexan-1,2-dicarbonsäuredi-2-ethylhexylester,
Cyclohexan-1,2-dicarbonsäuredi-n-nonylester,
Cyclohexan-1,2-dicarbonsäurediisononylester,
Cyclohexan-1,2-dicarbonsäuredi-n-decylester,
Cyclohexan-1,2-dicarbonsäurediisodecylester,
Cyclohexan-1,2-dicarbonsäuredi-n-undecylester,
Cyclohexan-1,2-dicarbonsäurediisododecylester,
Cyclohexan-1,2-dicarbonsäuredi-n-octadecylester,
Cyclohexan-1,2-dicarbonsäurediisooctadecylester,
Cyclohexan-1,2-dicarbonsäuredi-n-eicosylester,
Cyclohexan-1,2-dicarbonsäuremonocyclohexylester,
Cyclohexan-1,2-dicarbonsäuredicyclohexylester;

Cyclohexan-1,3-dicarbonsäurealkylester, wie z.B.
Cyclohexan-1,3-dicarbonsäuremonomethylester,
Cyclohexan-1,3-dicarbonsäuredimethylester,
Cyclohexan-1,3-dicarbonsäurediethylester,
Cyclohexan-1,3-dicarbonsäuredi-n-propylester,
Cyclohexan-1,3-dicarbonsäuredi-n-butylester,
Cyclohexan-1,3-dicarbonsäuredi-tert.-butylester,
Cyclohexan-1,3-dicarbonsäurediisobutylester,
Cyclohexan-1,3-dicarbonsäuremonoglykolester,
Cyclohexan-1,3-dicarbonsäurediglykolester,
Cyclohexan-1,3-dicarbonsäuredi-n-octylester,
Cyclohexan-1,3-dicarbonsäurediisooctylester,
Cyclohexan-1,3-dicarbonsäuredi-2-ethylhexylester,
Cyclohexan-1,3-dicarbonsäuredi-n-nonylester,
Cyclohexan-1,3-dicarbonsäurediisononylester,
Cyclohexan-1,3-dicarbonsäuredi-n-decylester,
Cyclohexan-1,3-dicarbonsäurediisodecylester,
Cyclohexan-1,3-dicarbonsäuredi-n-undecylester,
Cyclohexan-1,3-dicarbonsäurediisododecylester,
Cyclohexan-1,3-dicarbonsäuredi-n-octadecylester,
Cyclohexan-1,3-dicarbonsäurediisooctadecylester,
Cyclohexan-1,3-dicarbonsäuredi-n-eicosylester,
Cyclohexan-1,3-dicarbonsäuremonocyclohexylester,
Cyclohexan-1,3-dicarbonsäuredicyclohexylester.

Cyclohexan-1,2,4-tricarbonsäurealkylester, wie z.B.
Cyclohexan-1,2,4-tricarbonsäuremonomethylester,
Cyclohexan-1,2,4-tricarbonsäuredimethylester,
Cyclohexan-1,2,4-tricarbonsäurediethylester,
Cyclohexan-1,2,4-tricarbonsäuredi-n-propylester,
Cyclohexan-1,2,4-tricarbonsäuredi-n-butylester,
Cyclohexan-1,2,4-tricarbonsäuredi-tert-butylester,
Cyclohexan-1,2,4-tricarbonsäurediisobutylester,
Cyclohexan-1,2,4-tricarbonsäuremonoglykolester,
Cyclohexan-1,2,4-tricarbonsäurediglykolester,
Cyclohexan-1,2,4-tricarbonsäuredi-n-octylester,
Cyclohexan-1,2,4-tricarbonsäurediisooctylester,
Cyclohexan-1,2,4-tricarbonsäuredi-2-ethylhexylester,
Cyclohexan-1,2,4-tricarbonsäuredi-n-nonylester,
Cyclohexan-1,2,4-tricarbonsäurediisononylester,
Cyclohexan-1,2,4-tricarbonsäuredi-n-decylester,
Cyclohexan-1,2,4-tricarbonsäurediisodecylester,
Cyclohexan-1,2,4-tricarbonsäuredi-n-undecylester,
Cyclohexan-1,2,4-tricarbonsäurediisododecylester,
Cyclohexan-1,2,4-tricarbonsäuredi-n-octadecyl-ester,
Cyclohexan-1,2,4-tricarbonsäurediisooctadecylester,
Cyclohexan-1,2,4-tricarbonsäuredi-n-eicosylester,
Cyclohexan-1,2,4-tricarbonsäuremonocyclohexylester,
Cyclohexan-1,2,4-tricarbonsäuredicyclohexylester sowie
Cyclohexan-1,2,4-tricarbonsäuretrimethylester,
Cyclohexan-1,2,4-tricarbonsäuretriethylester,
Cyclohexan-1,2,4-tricarbonsäuretri-n-propylester,
Cyclohexan-1,2,4-tricarbonsäuretri-n-butylester,
Cyclohexan-1,2,4-tricarbonsäuretri-tert-butylester,
Cyclohexan-1,2,4-tricarbonsäuretriisobutylester,
Cyclohexan-1,2,4-tricarbonsäuretriglykolester,
Cyclohexan-1,2,4-tricarbonsäuretri-n-octylester,
Cyclohexan-1,2,4-tricarbonsäuretriisooctylester,
Cyclohexan-1,2,4-tricarbonsäuretri-2-ethylhexylester,
Cyclohexan-1,2,4-tricarbonsäuretri-n-nonylester,
Cyclohexan-1,2,4-tricarbonsäuretriisododecylester,
Cyclohexan-1,2,4-tricarbonsäuretri-n-undecylester,
Cyclohexan-1,2,4-tricarbonsäuretriisododecylester,
Cyclohexan-1,2,4-tricarbonsäuretri-n-octadecylester,
Cyclohexan-1,2,4-tricarbonsäuretriisooctadecylester,
Cyclohexan-1,2,4-tricarbonsäuretri-n-eicosylester,
Cyclohexan-1,2,4-tricarbonsäuretricyclohexylester.

Cyclohexan-1,3,5-tricarbonsäurealkylester, wie z.B.
Cyclohexan-1,3,5-tricarbonsäuremonomethylester,
Cyclohexan-1,3,5-tricarbonsäuredimethylester,
Cyclohexan-1,3,5-tricarbonsäurediethylester,
Cyclohexan-1,3,5-tricarbonsäuredi-n-propylester,
Cyclohexan-1,3,5-tricarbonsäuredi-n-butylester,
Cyclohexan-1,3,5-tricarbonsäuredi-tert-butylester,
Cyclohexan-1,3,5-tricarbonsäurediisobutylester,
Cyclohexan-1,3,5-tricarbonsäuremonoglykolester,
Cyclohexan-1,3,5-tricarbonsäurediglykolester,
Cyclohexan-1,3,5-tricarbonsäuredi-n-octylester,
Cyclohexan-1,3,5-tricarbonsäurediisooctylester,
Cyclohexan-1,3,5-tricarbonsäuredi-2-ethylhexylester,
Cyclohexan-1,3,5-tricarbonsäuredi-n-nonylester,
Cyclohexan-1,3,5-tricarbonsäurediisononylester,
Cyclohexan-1,3,5-tricarbonsäuredi-n-decylester,
Cyclohexan-1,3,5-tricarbonsäurediisodecylester,
Cyclohexan-1,3,5-tricarbonsäuredi-n-undecylester,
Cyclohexan-1,3,5-tricarbonsäurediisododecylester,
Cyclohexan-1,3,5-tricarbonsäuredi-n-octadecylester,
Cyclohexan-1,3,5-tricarbonsäurediisooctadecylester,
Cyclohexan-1,3,5-tricarbonsäuredi-n-eicosylester,
Cyclohexan-1,3,5-tricarbonsäuremonocyclohexylester,
Cyclohexan-1,3,5-tricarbonsäuredicyclohexylester, sowie
Cyclohexan-1,3,5-tricarbonsäuretrimethylester,
Cyclohexan-1,3,5-tricarbonsäuretriethylester,
Cyclohexan-1,3,5-tricarbonsäuretri-n-propylester,
Cyclohexan-1,3,5-tricarbonsäuretri-n-butylester,
Cyclohexan-1,3,5-tricarbonsäuretri-tert-butylester,
Cyclohexan-1,3,5-tricarbonsäuretriisobutylester,
Cyclohexan-1,3,5-tricarbonsäuretriglykolester,
Cyclohexan-1,3,5-tricarbonsäuretri-n-octylester,
Cyclohexan-1,3,5-tricarbonsäuretriisooctylester,
Cyclohexan-1,3,5-tricarbonsäuretri-2-ethylhexylester,
Cyclohexan-1,3,5-tricarbonsäuretri-n-nonylester,
Cyclohexan-1,3,5-tricarbonsäuretriisododecylester,
Cyclohexan-1,3,5-tricarbonsäuretri-n-undecylester,
Cyclohexan-1,3,5-tricarbonsäuretriisododecylester,
Cyclohexan-1,3,5-tricarbonsäuretri-n-octadecylester,
Cyclohexan-1,3,5-tricarbonsäuretriisooctadecylester,
Cyclohexan-1,3,5-tricarbonsäuretri-n-eicosylester,
Cyclohexan-1,3,5-tricarbonsäuretricyclohexylester.

Cyclohexan-1,2,3-tricarbonsäurealkylester, wie z.B.
Cyclohexan-1,2,3-tricarbonsäuremonomethylester,
Cyclohexan-1,2,3-tricarbonsäuredimethylester,
Cyclohexan-1,2,3-tricarbonsäurediethylester,
Cyclohexan-1,2,3-tricarbonsäuredi-n-propylester,
Cyclohexan-1,2,3-tricarbonsäuredi-n-butylester,
Cyclohexan-1,2,3-tricarbonsäuredi-tert-butylester,
Cyclohexan-1,2,3-tricarbonsäurediisobutylester,
Cyclohexan-1,2,3-tricarbonsäuremonoglykolester,
Cyclöhexan-1,2,3-tricarbonsäurediglykolester,
Cyclohexan-1,2,3-tricarbonsäuredi-n-octylester,
Cyclohexan-1,2,3-tricarbonsäurediisooctylester,
Cyclohexan-1,2,3-tricarbonsäuredi-2-ethylhexylester,
Cyclohexan-1,2,3-tricarbonsäuredi-n-nonylester,
Cyclohexan-1,2,3-tricarbonsäurediisononylester,
Cyclohexan-1,2,3-tricarbonsäuredi-n-decylester,
Cyclohexan-1,2,3-tricarbonsäurediisodecylester,
Cyclohexan-1,2,3-tricarbonsäureäuredi-n-undecylester,
Cyclohexan-1,2,3-tricarbonsäurediisododecylester,
Cyclohexan-1,2,3-tricarbonsäuredi-n-octadecylester,
Cyclohexan-1,2,3-tricarbonsäurediisooctadecylester,
Cyclohexan-1,2,3-tricarbonsäuredi-n-eicosylester,
Cyclohexan-1,2,3-tricarbonsäuremonocyclohexylester,
Cyclohexan-1,2,3-tricarbonsäuredicyclohexylester, sowie
Cyclohexan-1,2,3-tricarbonsäuretrimethylester,
Cyclohexan-1,2,3-tricarbonsäuretriethylester,
Cyclohexan-1,2,3-tricarbonsäuretri-n-propylester,
Cyclohexan-1,2,3-tricarbonsäuretri-n-butylester,
Cyclohexan-1,2,3-tricarbonsäuretri-tert-butylester,
Cyclohexan-1,2,3-tricarbonsäuretriisobutylester,
Cyclohexan-1,2,3-tricarbonsäuretriglykolester,
Cyclohexan-1,2,3-tricarbonsäuretri-n-octylester,
Cyclohexan-1,2,3-tricarbonsäuretriisooctylester,
Cyclohexan-1,2,3-tricarbonsäuretri-2-ethylhexylester,
Cyclohexan-1,2,3-tricarbonsäuretri-n-nonylester,
Cyclohexan-1,2,3-tricarbonsäuretriisododecylester,
Cyclohexan-1,2,3-tricarbonsäuretri-n-undecylester,
Cyclohexan-1,2,3-tricarbonsäuretriisododecylester,
Cyclohexan-1,2,3-tricarbonsäuretri-n-octadecylester,
Cyclohexan-1,2,3-tricarbonsäuretriisooctadecylester,
Cyclohexan-1,2,3-tricarbonsäuretri-n-eicosylester,
Cyclohexan-1,2,3-tricarbonsäuretricyclohexylester.
Cyclohexan-1,2,4,5-tetracarbonsäurealkylester, wie z.B.
Cyclohexan-1,2,4,5-tetracarbonsäuremonomethylester,
Cyclohexan-1,2,4,5-tetracarbonsäuredimethylester,
Cyclohexan-1,2,4,5-tetracarbonsäurediethylester,
Cyclohexan-1,2,4,5-tetracarbonsäuredi-n-propylester,
Cyclohexan-1,2,4,5-tetracarbonsäuredi-n-butylester,
Cyclohexan-1,2,4,5-tetracarbonsäuredi-tert.-butylester,
Cyclohexan-1,2,4,5-tetracarbonsäurediisobutylester,
Cyclohexan-1,2,4,5-tetracarbonsäuremonoglykolester,
Cyclohexan-1,2,4,5-tetracarbonsäurediglykolester,
Cyclohexan-1,2,4,5-tetracarbonsäuredi-n-octylester,
Cyclohexan-1,2,4,5-tetracarbonsäurediisooctylester,
Cyclohexan-1,2,4,5-tetracarbonsäuredi-2-ethylhexylester,
Cyclohexan-1,2,4,5-tetracarbonsäuredi-n-nonylester,
Cyclohexan-1,2,4,5-tetracarbonsäurediisononylester,
Cyclohexan-1,2,4,5-tetracarbonsäuredi-n-decylester,
Cyclohexan-1,2,4,5-tetracarbonsäurediisodecylester,
Cyclohexan-1,2,4,5-tetracarbonsäuredi-n-undecylester,
Cyclohexan-1,2,4,5-tetracarbonsäurediisododecylester,
Cyclohexan-1,2,4,5-tetracarbonsäuredi-n-octadecylester,
Cyclohexan-1,2,4,5-tetracarbonsäurediisooctadecylester,
Cyclohexan-1,2,4,5-tetracarbonsäuredi-n-eicosylester,
Cyclohexan-1,2,4,5-tetracarbonsäuremonocyclohexylester,
Cyclohexan-1,2,4,5-tetracarbonsäuretrimethylester,
Cyclohexan-1,2,4,5-tetracarbonsäuretriethylester,
Cyclohexan-1,2,4,5-tetracarbonsäuretri-n-propylester,
Cyclohexan-1,2,4,5-tetracarbonsäuretri-n-butylester,
Cyclohexan-1,2,4,5-tetracarbonsäuretri-tert-butylester,
Cyclohexan-1, 2,4,5-tetracarbonsäuretriisobutylester,
Cyclohexan-1,2,4,5-tetracarbonsäuretriglykolester,
Cyclohexan-1,2,4,5-tetracarbonsäuretri-n-octylester,
Cyclohexan-1,2,4,5-tetracarbonsäuretriisooctylester,
Cyclohexan-1,2,4,5-tetracarbonsäuretri-2-ethylhexylester,
Cyclohexan-1,2,4,5-tetracarbonsäuretri-n-nonylester,
Cyclohexan-1,2,4,5-tetracarbonsäuretriisododecylester,
Cyclohexan-1,2,4,5-tetracarbonsäuretri-n-undecylester,
Cyclohexan-1,2,4,5-tetracarbonsäuretriisododecylester,
Cyclohexan-1,2,4,5-tetracarbonsäuretri-n-octadecylester,
Cyclohexan-1,2,4,5-tetracarbonsäuretriisooctadecylester,
Cyclohexan-1,2,4,5-tetracarbonsäuretri-n-eicosylester,
Cyclohexan-1,2,4,5-tetracarbonsäuretricyclohexylester, sowie
Cyclohexan-1,2,4,5-tetracarbonsäuretetramethylester,
Cyclohexan-1,2,4,5-tetracarbonsäuretetraethylester,
Cyclohexan-1,2,4,5-tetracarbonsäuretetra-n-propylester,
Cyclohexan-1,2,4,5-tetracarbonsäuretetra-n-butylester,
Cyclohexan-1,2,4,5-tetracarbonsäuretetra-tert-butylester;
Cyclohexan-1,2,4,5-tetracarbonsäuretetraisobutylester,
Cyclohexan-1,2,4,5-tetracarbonsäuretetraglykolester,
Cyclohexan-1,2,4,5-tetracarbonsäuretetra-n-octylester,
Cyclohexan-1,2,4,5-tetracarbonsäuretetraisooctylester,
Cyclohexan-1,2,4,5-tetracarbonsäuretetra-2-ethylhexylester,
Cyclohexan-1,2,4,5-tetracarbonsäuretetra-n-nonylester,
Cyclohexan-1,2,4,5-tetracarbonsäuretetraisododecylester,
Cyclohexan-1,2,4,5-tetracarbonsäuretetra-n-undecylester,
Cyclohexan-1,2,4,5-tetracarbonsäuretetraisododecylester,
Cyclohexan-1,2,4,5-tetracarbonsäuretetra-n-octadecylester,
Cyclohexan-1,2,4,5-tetracarbonsäuretetraisooctadecylester,
Cyclohexan-1,2,4,5-tetracarbonsäuretetra-n-eicosylester,
Cyclohexan-1,2,4,5-tetracarbonsäuretetracyclohexylester.

Besonders bevorzugt werden die Cyclohexan-1,2-dicarbonsäureester verwendet und insbesondere die folgenden:
Cyclohexan-1,2-dicarbonsäuredi(isopentyl)ester, erhältlich durch Hydrierung von Di(isopentyl)phthalat mit der Chemical Abstracts Registry Nummer (im folgenden: CAS Nr.) 84777-06-0;
Cyclohexan-1,2-dicarbonsäuredi(isoheptyl)ester, erhältlich durch Hydrierung von Di(isoheptyl)phthalat mit der CAS Nr. 71888-89-6;
Cyclohexan-1,2-dicarbonsäuredi(isononyl)ester, erhältlich durch Hydrierung eines Di(isononyl)phthalats mit der CAS Nr. 68515-48-0;
Cyclohexan-1,2-dicarbonsäuredi(isononyl)ester, erhältlich durch Hydrierung eines Di(isononyl)phthalats mit der CAS Nr. 28553-12-0, basierend auf n-Buten;
Cyclohexan-1,2-dicarbonsäuredi (isononyl)ester, erhältlich durch Hydrierung eines Di(isononyl)phthalats mit der CAS Nr. 28553-12-0 basierend auf Isobuten;
ein 1,2-Di-C₉-Alkylester der Cyclohexandicarbonsäure, erhältlich durch Hydrierung eines Di(nonyl)phthalats mit der CAS Nr. 68515-46-8;
ein Cyclohexan-1,2-dicarbonsäuredi(isodecyl)ester erhältlich durch Hydrierung eines Di (isodecyl) phthalats mit der CAS Nr. 68515-49-1;
ein 1,2-Di-C₇₋₁₁-Alkylester der Cyclohexandicarbonsäure, erhältlich durch Hydrierung des entsprechenden Phthalsäureesters mit der CAS Nr. 68515-42-4;
ein 1,2-Di-C₇₋₁₁-Alkylester der Cyclohexandicarbonsäure, erhältlich durch Hydrierung der Di-C₇₋₁₁-Phthalate mit folgenden CAS Nr. 111 381-89-6, 111 381 90-9, 111 381 91-0, 68515-44-6, 68515-45-7 und 3648-20-7;
ein 1,2-Di-C₉₋₁₁-Alkylester der Cyclohexandicarbonsäure., erhältlich durch Hydrierung eines Di-C₉₋₁₁-Phthalats mit der CAS Nr. 98515-43-5;
ein 1,2-Di(isodecyl)cyclohexandicarbonsäureester, erhältlich durch Hydrierung eines Di(isodecyl)phthalats, das hauptsächlich aus Di-(2-propylheptyl)phthalat besteht;
ein 1,2-Di-C₇₋₉-Cyclohexandicarbonsäureester, erhältlich durch Hydrierung des entsprechenden Phthalsäureesters, der verzweigtkettige oder lineare C₇₋₉-Alkylestergruppen aufweist;

Weitere brauchbare Cyclohexanpolycarbonsäureester sind die Kernhydrierungsprodukte der kommerziell erhältlichen Benzolcarbonsäureester mit den Handelsnamen Jayflex DINP (CAS Nr. 68515-48-0), Jayflex DIDP (CAS Nr. 68515-49-1), Palatinol 9-P, Vestinol 9 (CAS Nr. 28553-12-0), TOTM-I (CAS Nr. 3319-31-1), Linplast 68-TM und Palatinol N (CAS Nr. 28553-12-0).

Die Cyclohexanpolycarbonsäureester sind bekannt oder können nach bekannten Methoden hergestellt werden. Die Herstellung erfolgt im Allgemeinen durch Kernhydrierung der Ester der entsprechenden Benzolpolycarbonsäuren, wie Phthalsäure, Isophthalsäure, Terephthalsäure, Trimellithsäure, Hemimellithsäure, Pyromellithsäure oder Trimesinsäure. Verfahren zur Kernhydrierung sind dem Fachmann bekannt, beispielsweise aus der WO 99/32427. Auf den Inhalt dieser Publikation wird in vollem Umfang Bezug genommen. Die Ester der Benzolpolycarbonsäuren werden in üblicher Weise durch Umsetzung der Alkohole mit den Säuren oder deren Anhydriden erhalten.

Die Cyclohexanpolycarbonsäureester können einzeln oder in Gemischen von zwei oder mehreren zur Anwendung kommen. Bei den erwähnten Cyclohexan-1,2-dicarbonsäureestern handelt es sich in der Regel um Gemische, wobei sich die einzelnen Ester herstellungsbedingt durch die Struktur des Alkoholrestes unterscheiden, (die Zahl der Kohlenstoffatome der Alkoholreste ist im Allgemeinen gleich groß). Die Cyclohexan-1,2-dicarbonsäureester werden vorzugsweise ausgehend von einem Olefin oder einem z.B. durch Dimerisierung eines Olefins erhaltenen Gemisch isomerer Olefine hergestellt. Das Olefin oder das Gemisch isomerer Olefine wird dann einer Hydroformylierung mit CO und H₂ und gegebenenfalls einer Hydrierung zu dem entsprechenden Alkohol, der ein Kohlenstoffatom mehr aufweist als das Olefin, unterworfen. Der Alkohol wird dann mit Phthalsäureanhydrid zu dem entsprechenden Phthalsäureester umgesetzt, der anschließend kernhydriert wird. Die erwähnte Olefindimerisierung, -formylierung und -hydrierung sind dem Fachmann bekannte Verfahren und beispielsweise beschrieben in Ullmann's Encyclopedia of Industrial Chemistry, Vol. A13, 243 und 406 (1989) und Vol. A18 321 (1991).

Besonders bevorzugt verwendet man in den erfindungsgemäßen Formulierungen den Cyclohexan-1,2-dicarbonsäuredi(isononyl)ester. Dieser ist erhältlich durch Butendimerisierung ausgehend von einem Gemisch aus 1-Buten, iso-Buten, trans-2-Buten und cis-2-Buten, an einem Nickeloxid-haltigen Katalysator. Das erhaltene Octengemisch wird der Hydroformylierung mit CO und H₂ unter Verwendung eines Cobalt- oder Rhodium-Katalysators und anschließend einer Hydrierung unter Verwendung eines üblichen Hydrierkatalysators, beispielsweise Raney-Nickel, unterworfen. Man erhält auf diese Weise ein Gemisch aus isomeren Nonanolen, das durch Umsetzung mit Phthalsäureanhydrid und Kernhydrierung in den Cyclohexan-1,2-dicarbonsäuredi(isononyl)ester überführt wird.

Die Menge an Cyclohexanpolycarbonsäureester in der erfindungsgemäßen Formulierung beträgt vorzugsweise 30 bis 90 Gew.-% und insbesondere 40 bis 80 Gew.-%, bezogen auf das Gesamtgewicht der Formulierung.

### Komponente b):

Die erfindungsgemäße Formulierung kann wasserfrei vorliegen oder 0,5 bis 70 Gew.-% Wasser enthalten. Vorzugsweise enthält die Formulierung Wasser und zwar in einer Menge von 16 bis 70 Gew.-%, insbesondere 20 bis 70 Gew.-%, bezogen auf das Gesamtgewicht der Formulierung. Die Menge an Wasser hängt ab von der gewählten Formulierung.

### Komponente c):

Die erfindungsgemäßen Formulierungen enthalten übliche Hilfsund/oder Zusatzstoffe für die Herstellung von Formulierungen auf dem Gebiet des Pflanzenschutzes. Dazu gehören beispielsweise Tenside, Dispergierhilfsmittel, Netzmittel, Verdickungsmittel, organische Lösungsmittel, Cosolventien, Entschäumer, Carbonsäuren, Konservierungsmittel, Stabilisierungsmittel, etc.

Geeignete Tenside und Dispergierhilfsmittel sind beispielsweise:
- anionische Tenside, z.B. Alkali-, Erdalkali- oder Ammoniumsalze der Fettsäuren wie Kaliumstearat, Alkylsulfate, Alkylethersulfate, Alkyl- oder iso-Alkylsulfonate, Alkylbenzolsulfonate wie Na-Dodecylbenzolsulfonat, Alkylnaphthalinsulfonate, Alkylmethylestersulfonate, Acylglutamate, Alkylbernsteinsäureestersulfonate, Sarkosinate wie Natriumlauroylsarkosinat oder Taurate,
- kationische Tenside, z.B. Alkyltrimethylammonium-Halogenide oder -Alkylsulfate, Alkylpyridinium-Halogenide oder Dialkyldimethylammonium-Halogenide oder -Alkylsulfate,
- nichtionische Tenside, z.B. alkoxylierte tierische oder pflanzliche Fette und Öle wie Maisölethoxylate, Rizinusölethoxylate, Talgfettethoxylate, Glycerinester wie Glycerinmonostearat, Fettalkoholalkoxylate und Oxoalkoholalkoxylate, Alkylphenolalkoxylate wie Isononylphenolethoxylate, Fettaminalkoxylate, Fettsäureamidalkoxylate, Zuckertenside wie Sorbitanfettsäureester (Sorbitanmonooleat, Sorbitantristearat), Polyoxyethylensorbitanfettsäureester, Alkylpolyglycoside, N-Alkylgluconamide, Alkylmethylsulfoxide, Alkyldimethylphosphinoxide wie Tetradecyldimethylphosphinoxid,
- Zwitterionische Tenside, z.B. Sulfobetaine, Carboxybetaine, Alkyldimethylaminoxide wie Tetradecyldimethylaminoxid,
- Polymertenside, z.B. Di-, Tri- oder Multi-Blockpolymere vom Typ (AB)x, ABA und BAB wie Polyethylenoxid-block-polypropylenoxid, Polystyrol-block-polyethylenoxid, AB-Kammpolymere wie Polymethacrylat- oder Polyacrylat-comb-polyethylenoxid,
- Perfluortenside, Silicontenside, Phospholipide wie Lecithin, Aminosäuretenside wie N-Lauroylglutamat, oberflächenaktive Homo- und Copolymere wie Polyvinylpyrrolidon, Polyacrylsäure, Polyvinylalkohol, Polyethylenoxid, maleinsäureanhydrid-Isobuten-Copolymere, Vinylpyrrolidon-Vinylacetat-Copolymere.

Vorzugsweise verwendet man als Tensid einen oder mehrere einheitliche oder gemischte Ester der Phosphorsäure oder Diphosphorsäure mit Polyalkylenoxidethern, wobei die Polyalkylenoxidether in der Regel nur eine einzige Hydroxygruppe aufweisen (z.B. Rlearfac® , Hersteller BASF Corp.).

Als Polyalkylenoxidether kommen z.B. Ether von Alkylphenolen wie Nonylphenol oder von verzweigten oder unverzweigten aliphatischen Alkoholen, beispielsweise mit 6 bis 30, bevorzugt mit 10 bis 20 Kohlenstoffatomen und insbesondere von Fettalkoholen mit 10 bis 12 Kohlenstoffatomen in Betracht.

Die monohydroxylierten Polyalkylenoxidether sind allgemein bekannt oder in an sich bekannter Weise, vor allem durch Alkoxylierung der entsprechenden Alkohole, zugänglich. Bevorzugte Alkoxylierungsmittel sind Ethylenoxid und Propylenoxid, welche einzeln, im Gemisch, nacheinander oder abwechselnd mit einer geeigneten Phosphorverbindung umgesetzt werden können, wodurch Alkoxylierungsprodukte unterschiedlicher Zusammensetzung, etwa mit Blockstrukturen, resultieren können.

Die Herstellung dieser Phosphorsäureester ist allgemein bekannt und erfolgt beispielsweise durch Umsetzung der entsprechenden monofunktionellen Polyalkylenoxidether mit Phosphorsäure, Diphosphorpentoxid, Polyphosphorsäure oder Phosphoroxytrichlorid (vgl. "Nonionic Surfactants", Martin Schick (Hrsg.), Marcel Dekker, New York, 1964, Kapitel 11, Seiten 372-394).

Der Anteil der Tenside und/oder Dispergierhilfsmittel kann jeweils 0 bis 40 Gew.-%, vorzugsweise 2 bis 30 Gew.-% betragen, bezogen auf das Gesamtgewicht der Formulierung.

Als Netzmittel kommen beispielsweise insbesondere in Betracht:
- Polyoxyethylen-/Polyoxypropylen-Blockpolymere, z.B. wie aus US-A 2,677,700, US-A 2,674,619 und EP-A-298 909 bekannt; besonders geeignete Produkte dieser Gruppe sind beispielsweise unter der Bezeichnung PLURONIC® (BASF AG), Synperonic PE-Typen bzw. Genapol-Marken im Handel erhältlich.
- Polyoxyethylen- oder Polyoxyethylen-/Polyoxypropylen-Fettalkohole (z.B. wie aus GB-A 643,422 oder Satkowski et al., Ind. Eng. Chem. 49 (1957) 1875 bekannt); besonders geeignete Produkte dieser Gruppe sind beispielsweise unter der Bezeichnung Plurafac® LF-Typen (Fa. BASF AG) im Handel erhältlich.
- Polyoxyethylen- oder Polyoxyethylen-/Polyoxypropylen-Fettamine, z.B. wie aus Stache, Tensidtaschenbuch, Carl-Hauser-Verlag München, Wien, 2. Ausgabe, S. 133 bekannt; besonders geeignete Produkte dieser Gruppe sind beispielsweise unter der Bezeichnung ATPLUS® (Fa. Uniqema) und ETHOMEEN® (Fa. Akzo) im Handel erhältlich.
- Fettsäureester bzw. Fettsäureesterethoxylate, z.B. wie aus US-A 1,914,100 bekannt; besonders geeignete Produkte dieser Gruppe sind beispielsweise unter der Bezeichnung ARLACEL®, ATMER®, ATMOSO und ATPET® im Handel erhältlich.
- Polyoxyethylen- oder Polyoxyethylen-/Polyoxypropylen-Oxyalkohole, z.B. wie aus US-A 2,508,035, US-A 2,508,036, US-A 2,617,830 bekannt; besonders geeignete Produkte dieser Gruppe sind beispielsweise unter der Bezeichnung LUTENSOL AT®, AO®, ON®, und LUTENSOL TO® (Fa. BASF AG) im Handel erhältlich. Polyoxyethylen- oder Polyoxyethylen-/Polyoxypropylen-Alkylphenole, z.B. wie aus FR-A 842 943 bekannt; besonders geeignete Produkte dieser Gruppe sind beispielsweise unter der Bezeichnung LUTENSOL AP® (Fa. BASF) im Handel erhältlich. Ferner z.B. auch Polyethlyenglykol-(PEG)-alkyd-Harze - wie z.B. Atlox 4914 (Produkt der Fa. Uniqema) oder z.B. ein Polyhydroxystearinsäure-Polyethylenoxid-Blockpolymer (ABA-Typ) - z.B. Atlox 4912 (ebenfalls Produkt der Fa. Uniqema)

Ferner auch sofern noch nicht oben genannt:
- Fettsäure-Polyoxyethylenester wie Laurylalkohol-Polyoxyethylenether-acetat,
- Alkyl-Polyoxyethylen- oder -Polyoxypropylenether etwa von iso-Tridecyl-alkohol und Fettalkohol-Polyoxyethylenether,
- Alkylarylalkohol-Polyoxyethylenether wie Octylphenol-Polyoxyethylenether,
- Tributylphenol-Polyoxyethylenether,
- ethoxyliertes iso-Octyl-, Octyl- oder Nonylphenol oder Rizinusöl,
- Sorbitester,
- Arylsulfonsäuren, Alkylsulfonsäuren, Alkylschwefelsäuren,
- Alkali-, Erdalkali- und Ammoniumsalze von Arylsulfonsäuren, z.B. Lignin-, Phenol-, Naphthalin- und Dibutylnaphthalinsulfonsäuren, Alkylsulfonsäuren, Alkylaryl-sulfonsäuren, Alkyl-, Laurylether- und Fettalkoholschwefelsäuren, Fettsäuren, sulfatierte Hexa-, Hepta- und Octadecanole und Fettalkohol-glykolether,
- Kondensationsprodukte von sulfoniertem Naphthalin und seiner Derivate mit Formaldehyd,
- Kondensationsprodukte von Naphthalinsulfonsäuren mit Phenol und Formaldehyd und
- Eiweißhydrolysate.

Der Anteil der Netzmittel in der Formulierung kann 0 bis 40, vorzugsweise 2 bis 30 Gew.-% betragen.

Als Entschäumer eignen sich aliphatische oder aromatische Monoalkohole mit 4 bis 14, vorzugsweise 6 bis 10 Kohlenstoffatomen wie n-Octanol oder n-Decanol oder Siliconöl-Emulsionen bzw. Siliconöle und/oder deren Derivate.

Der Anteil der Entschäumer in der Formulierung liegt normalerweise bei 0,01 bis 5 und vor allem bei 0,1 bis 3 Gew.-%.

Geeignete organische Lösungsmittel und Cosolventien sind z.B. Mineralöle, natürliche vorkommende Öle wie Rapsöl, Sojaöl und die Methylester der diesen Ölen zugrundeliegenden Carbonsäuren wie Methyloleat und Rapsölmethylester, Fettsäureester, vor allem mit C₁-C₄-Alkanolen und organische Lösungsmittel wie durch geradkettige oder verzweigte Alkylgruppen substituierte Benzole oder Naphthaline (Shellsol 150R, Shellsol 200R und Solvesso®-Marken), aliphatische Kohlenwasserstoffe, wie Cyclohexan oder Paraffine, Alkohole, wie Butanol oder Glykol oder deren Ether und Ester, Ketone, wie Aceton, Methylethylketon, Methylisobutylketon oder Cyclohexanon, polare Lösungsmittel, z.B. Amide, wie Dimethylformamid, N-Methylpyrrolidon oder N-Octylpyrrolidon, oder Dimethylsulfoxid.

Der Anteil der Lösungsmittel und/oder Cosolventien in der Formulierung kann 0 bis 60 und vor allem 5 bis 30 Gew.-% betragen.

Außerdem kann die Mischung eine oder mehrere Carbonsäuren mit 4 bis 20, insbesondere 6 bis 18 Kohlenstoffatomen wie Ölsäure oder 2-Ethylhexansäure und/oder eine oder mehrere der den Verbindungen I zugrundeliegenden Dicarbonsäuren, z.B. Adipinsäure, Sebacinsäure, Bernsteinsäure oder Fruchtsäuren, wie z.B. Citronensäure enthalten.

Der Anteil dieser Mono- bzw. Polycarbonsäuren an der Formulierung beträgt 0 bis 30, vorzugsweise 0 bis 10 Gew.-%.

Geeignete Verdickungsmittel sind insbesondere thixotrope Additive, welche der Formulierung ein pseudoplastisches Fließverhalten verleihen, d.h. hohe Viskosität im Ruhezustand und niedrige viskosität in bewegtem Zustand. Geeignete Verbindungen sind beispielsweise Polysaccharide, wie Xanthangummi, Kelzan der Firma Kelco oder Rhodopol 23 der Firma Rhone Poulenc. Die Verdickungsmittel werden in einer Menge von 0,01 bis 5 Gew.-%, vorzugsweise 0,05 bis 3 Gew.-% und insbesondere 0,1 bis 2 Gew.-%, bezogen auf das Gesamtgewicht der Formulierung, eingesetzt.

Als Konservierungsmittel können übliche Verbindungen eingesetzt werden, wie para-Hydroxybenzoesäurealkylester und Bakterizide, wie Proxel (Handelsprodukt der Firma ICI), Nipacide BIT 20 (Handelsprodukt der Firma Thor-Chemie), Kathon MK und Acticide (Handelsprodukte der Firma Rohm & Haas). Als Stabilisierungsmittel kann man organische Säuren verwenden, wie Essigsäure oder Zitronensäure. Der Anteil des Konservierungs- oder Stabilisierungsmittels in der Formulierung beträgt im Allgemeinen jeweils 0 bis 5 Gew.-%, vorzugsweise 0,1 bis 4 Gew.-%.

### Komponente d):

Die erfindungsgemäßen Gemische bzw. Formulierungen können ohne Pflanzenbehandlungswirkstoff formuliert sein. Es handelt sich dann um "stand-alone"-Produkte, d.h. die Abgabe des Gemisches bzw. der Formulierung und des Pflanzenbehandlungswirkstoffes oder der Pflanzenbehandlungswirkstoffe an den Verbraucher erfolgt in separaten Verpackungen. Der Verbraucher hat dabei den Vorteil, dass er die Menge des Wirkstoffes oder der Wirkstoffe frei dosieren kann und dass sich Restmengen des Gemisches oder der Formulierung auch an anderer Stelle verwenden lassen.

Die erfindungsgemäßen Formulierungen enthalten auch mindestens einen Pflanzenbehandlungswirkstoff, sie liegen als "builtin"-Produkt vor. Die Menge an Wirkstoff liegt im Bereich von 2 bis 70 Gew.-%, insbesondere 5 bis 60 Gew.-%, bezogen auf das Gesamtgewicht der Formulierung. Der Wirkstoff kann ausgewählt sein unter Herbiziden, Fungiziden, Insektiziden, Akariziden, Nematiziden, und das Pflanzenwachstum regulierenden Wirkstoffen.

Die herbiziden Pflanzenschutzmittel enthalten einen oder mehrere beispielsweise der folgenden herbiziden Pflanzenschutz-Wirkstoffe:

1,3,4-Thiadiazole wie Buthidazole und Cyprazole, Amide wie Allidochlor, Benzoylpropethyl, Bromobutide, Chlorthiamid, Dimepiperate, Dimethenamid, Diphenamid, Etobenzanid, Flampropmethyl, Fosamin, Isoxaben, Monalide, Naptalame, Pronamid, Propanil, Aminophosphorsäuren wie Bilanafos, Buminafos, Glufosinateammonium, Glyphosate, Sulfosate, Aminotriazole wie Amitrol, Anilide wie Anilofos, Mefenacet, Aryloxyalkansäuren wie 2,4-D, 2,4-DB, Clomeprop, Dichlorprop, Dichlorprop-P, Dichlorprop-P, Fenoprop, Fluroxypyr, MCPA, MCPB, Mecoprop, Mecoprop-P, Napropamide, Napropanilide, Triclopyr, Benzoesäuren wie Chloramben, Dicamba, Benzothiadiazinone wie Bentazon, Bleacher wie Clomazone, Diflufenican, Fluorochloridone, Flupoxam, Fluridone, Pyrazolate, Sulcotrione, Carbamate wie Carbetamid, Chlorbufam, Chlorpropham, Desmedipham, Phenmedipham, Vernolate, Chinolincarbonsäuren wie Quinclorac, Quinmerac, Dichlorpropionsäuren wie Dalapon, Dihydrobenzofurane wie Ethofumesate, Dihydrofuran-3-one wie Flurtamone, Dinitroaniline wie Benefin, Butralin, Dinitramin, Ethalfluralin, Fluchloralin, Isopropalin, Nitralin, Oryzalin, Pendimethalin, Prodiamine, Profluralin, Trifluralin, Dinitrophenole wie Bromofenoxim, Dinoseb, Dinoseb-acetat, Dinoterb, DNOC, Minoterb-Acetat, Diphenylether wie Acifluorfen-sodium, Aclonifen, Bifenox, Chlornitrofen, Difenoxuron, ethoxyfen, Fluorodifen, Fluoroglycofen-ethyl, Fomesafen, Furyloxyfen, Lactofen, Nitrofen, Nitrofluorfen, Oxyfluorfen, Dipyridyle wie Cyperquat, Difenzoquat-methylsulfat, Diquat, Paraquat-dichlorid, Imidazole wie Isocarbamid, Imidazolinone wie Imazamethapyr, Imazapyr, Imazaquin, Imazethabenz-methyl, Imazethapyr, Oxadiazole wie Methazole, Oxadiargyl, Oxadiazon, Oxirane wie Tridiphane, Phenole wie Bromoxynil, Ioxynil, Phenoxyphenoxypropionsäureester wie Clodinafop, Cyhalofop-butyl, Diciofop-methyl, Fenoxaprop-ethyl, Fenoxaprop-p-ethyl, Fenthiapropethyl, Fluazifop-butyl, Fluazifop-p-butyl, Haloxyfop-ethoxyethyl, Haloxyfop-methyl, Haloxyfop-p-methyl, Isoxapyrifop, Propaquizafop, Quizalofop-ethyl, Quizalofop-p-ethyl, Quizalofop-tefuryl, Phenylessigsäuren wie Chlorfenac, Phenylpropionsäuren wie Chlorophenprop-methyl, ppi-Wirkstoffe wie Benzofenap; Flumiclorac-pentyl, Flumioxazin, Flumipropyn, Flupropacil, Pyrazoxyfen, Sulfentrazone, Thidiazimin, Pyrazole wie Nipyraclofen, Pyridazine wie Chloridazon, Maleic hydrazide, Norflurazon, Pyridate, Pyridincarbonsäuren wie Clopyralid, Dithiopyr, Picloram, Thiazopyr, Pyrimidylether wie Pyrithiobacsäure, Pyrithiobac-sodium, KIH-2023, KIH-6127, Sulfonamide wie Flumetsulam, Metosulam, Triazolcarboxamide wie Triazofenamid, Uracile wie Bromacil, Lenacil, Terbacil, ferner Benazolin, Benfuresate, Bensulide, Benzofluor, Butamifos, Cafenstrole, Chlorthal-dimethyl, Cinmethylin, Dichlobenil, Endothall, Fluorbentranil, Mefluidide, Perfluidone, Piperophos.

Bevorzugte herbizide Pflanzenschutz-Wirkstoffe sind solche vom Sulfonylharnstoff-Typ wie Amidosulfuron, Azimsulfuron, Bensulfuron-methyl, Chlorimuron-ethyl, Chlorsulfuron, Cinosulfuron, Cyclosulfamuron, Ethametsulfuron-methyl, Flazasulfuron, Halosulfuron-methyl, Imazosulfuron, Metsulfuron-methyl, Nicosulfuron, Primisulfuron, Prosulfuron, Pyrazosulfuron-ethyl, Rimsulfuron, Sulfometuron-methyl, Thifensulfuron-methyl, Triasulfuron, Tribenuron-methyl, Triflusulfuron-methyl.

Weiterhin bevorzugte herbizide Pflanzenschutz-Wirkstoffe sind solche vom Cyclohexenon-Typ wie Alloxydim, Clethodim, Cloproxydim, Cycloxydim, Sethoxydim und Tralkoxydim.

Ganz besonders bevorzugte herbizide Wirkstoffe vom Cyclohexenon-Typ sind: Tepraloxydim (vgl. AGROW, Nr. 243, 3.11.95, Seite 21, Caloxydim) und 2-(1-[2-{4-Chlorphenoxy}propyloxyimino]butyl)-3-hydroxy-5-(2H-tetrahydrothiopyran-3-yl)-2-cyclohexen-1-on und vom Sulfonylharnstoff-Typ: N-(((4-methoxy-6-[trifluormethyl]-1,3,5-triazin-2-yl) amino)carbonyl)-2-(trifluormethyl)-benzolsulfonamid.

Die fungiziden Mittel enthalten einen oder mehrere beispielsweise der folgenden fungiziden Wirkstoffe: Schwefel, Dithiocarbamate und deren Derivate, wie Ferridimethyl-dithiocarbamat, Zinkdimethyldithiocarbamat, Zinkethylenbisdithiocarbamat, Manganethylenbisdithiocarbamat, Mangan-Zink-ethylendi-amin-bis-dithiocarbamat, Tetramethyl-thiuramdisulfid, Ammoniak-Komplex von Zink-(N,N-ethylen-bis-dithiocarbamat), Ammoniak-Komplex von zink-(N,N'-propylen-bis-dithiocarbamat), Zink-(N,N'-propylenbis-dithiocarbamat), N,N'-Polypropylen-bis-(thiocarba-moyl)disulfid;
Nitroderivate, wie Dinitro-(1-methylheptyl)-phenylcrotonat, 2-sec-Butyl-4,6-dinitrophenyl-3,3-dimethylacrylat, 2-sec-Butyl-4,6-dinitrophenyl-isopropylcarbonat, 5-Nitro-isophthalsäure-di-isopropylester;
heterocyclische Substanzen, wie 2-Heptadecyl-2-imidazolin-acetat, 2,4-Dichlor-6-(o-chloranilino)-s-triazin, O,O-Diethyl-phthal-imidophosphonothioat, 5-Amino-1-[bis-(dimethylamino)-phosphinyl]-3-phenyl-1,2,4-triazol, 2,3-Dicyano-1,4-dithioanthrachinon, 2-Thio-1,3-dithiolo[4,5-b]chinoxalin, 1-(Butylcarbamoyl)-2-benz-imidazol-carbaminsäuremethylester, 2-Methoxycarbonylamino-benz-imidazol, 2-(Furyl-(2))-benzimidazol, 2-(Thiazolyl-(4)-benz-imidazol, N-(1,1,2,2-Tetrachlorethylthio)-tetrahydrophthalimid, N-Trichlormethylthio-tetrahydrophthalimid, N-Trichlormethylthio-phthalimid,
N-Dichlorfluormethylthio-N',N'-dimethyl-N-phenyl-schwefelsäurediamid, 5-Ethoxy-3-trichlormethyl-1,2,3-thiadiazol, 2-Rhodan-methylthiobenzthiazol, 1,4-Dichlor-2,5-dimethoxybenzol, 4-(2-Chlorphenylhydrazono)-3-methyl-5-isoxazolon, Pyridin-2-thio-1-oxid, 8-Hydroxychinolin bzw. dessen Kupfersalz, 2,3-Dihydro-5-carboxanilido-6-methyl-1,4-oxathiin, 2,3-Dihydro-5-carboxani-lido-6-methyl-1,4-oxathiin-4,4-dioxid, 2-Methyl-5,6-dihydro-4H-pyran-3-carbonsäure-anilid, 2-Methyl-furan-3-carbonsäureanilid, 2,5-Dimethyl-furan-3-carbonsäureanilid, 2,4,5-Trimethyl-furan-3-carbonsäureanilid, 2,5-Dimethyl-furan-3-carbonsäurecyclohexyl-amid, N-Cyclohexyl-N-methoxy-2,5-dimethyl-furan-3-carbonsäure-amid, 2-Methyl-benzoesäure-anilid, 2-Iod-benzoesäure-anilid, N-Formyl-N-morpholin-2,2,2-trichlorethylacetal, Piperazin-1,4-di-ylbis-(1-(2,2,2-trichlor-ethyl)-formamid, 1-(3,4-Dichloranilino)-1-formylamino-2,2,2-trichlorethan, 2,6-Dimethyl-N-tridecylmor-pholin bzw. dessen Salze, 2,6-Dimethyl-N-cyclododecyl-morpholin bzw. dessen Salze, N-[3-(p-tert.-Butylphenyl)-2-methylpropyl]-cis-2,6-dimethylmorpholin, N-[3-(p-tert.-Butylphenyl)-Z-methyl-propyl]-piperidin, 1-[2-(2,4-Dichlorphenyl)-4-ethyl-1,3-dioxolan-2-yl-ethyl]-1H-1,2,4-triazol, 1-[2-(2,4-Dichlorphenyl)-4-n-pro-pyl-1,3-dioxolan-2-yl-ethyl]-1H-1,2,4-triazol, N-(n-Propyl)-N-(2,4,6-trichlorphenoxyethyl)-N'-imidazol-ylharnstoff, 1-(4-Chlorphenoxy)-3,3-dimethyl-1-(1H-1,2,4-triazol-1-yl)-2-butanon, 1-(4-Chlorphenoxy)-3,3-dimethyl-1-(1H-1,2,4-triazol-1-yl)-2-butanol, (2RS,3RS)-1-[3-(2-Chlorphenyl)-2-(4-fluorphenyl)-oxiran-2-ylmethyl]-1H-1,2,4-triazol, α-(2-Chlorphenyl)-α-(4-chlorphenyl)-5-pyrimidin-methanol, 5-Butyl-2-dimethylamino-4-hydroxy-6-methyl-pyrimidin, Bis-(p-chlorphenyl)-3-pyridinmethanol, 1,2-Bis-(3-ethoxycarbonyl-2-thioureido)-benzol, 1,2-Bis-(3-methoxycarbo-nyl-2-thioureido)-benzol,

Strobilurine wie Methyl-E-methoxyimino- [α-(o-tolyloxy)-o-tolyloxy-acetat, Methyl-E-2-{2-[6-(2-cyanophenoxy)-pyrimidin-4-yloxy]-phe-nyl}-3-methoxyacrylat, methyl-E-methoxyimino-[α-(2-phenoxyphe-nyl) ]-acetamid, Methyl-E-methoxyimino-[α-(2,5-dimethylphenoxy)-o-tolyl]-acetamid,

Anilinopyrimidine wie N-(4,6-Dimethylpyrimidin-2-yl)-anilin, N-[4-Methyl-6-(1-propinyl)-pyrimidin-2-yl]-anilin, N-[4-Methyl-6-cyclopropyl-pyrimidin-2-yl]-anilin,

Phenylpyrrole wie 4-(2,2-Difluor-1,3-benzodioxol-4-yl)-pyrrol-3-carbonitril,

Zimtsäureamide wie 3-(4-Chlorphenyl)-3-(3,4-dimethoxyphenyl)-acrylsäuremorpholid,
sowie verschiedene Fungizide, wie Dodecylguanidinacetat, 3- [3-(3,5-Dimethyl-2-oxycyclohexyl)-2-hydroxyethyl]-glutarimid, Hexa-chlorbenzol, DL-Methyl-N-(2,6-Dimethyl-phenyl)-N-furoyl(2)-ala-ninat, DL-N-(2,6-Dimethyl-phenyl)-N-(2'-methoxyacetyl)-alanin-methylester, N-(2,6-Dimethylphenyl)-N-chloracetyl-D,L-2-amino-butyrolacton, DL-N-(2,6-Dimethylphenyl)-N-(phenylacetyl)-alanin-methylester, 5-Methyl-5-vinyl-3-(3,5-dichlorphenyl)-2,4-dioxo-1,3-oxazolidin, 3-[3,5-Dichlorphenyl(-5-methyl-5-methoxymethyl]-1,3-oxazolidin-2,4-dion, 3-(3,5-Dichlorphenyl)-1-isopropylcarba-moylhydantoin, N-(3,5-Dichlorphenyl)-1,2-dimethylcyclopropan-1,2-dicarbonsäureimid, 2-Cyano-[N-(ethylaminocarbonyl)-2-meth-oximino]-acetamid, 1-[2-(2,4-Dichlorphenyl)-pentyl]-1H-1,2,4-triazol, 2,4-Difluor-α-(1H-1,2,4-triazolyl-1-methyl)-benzhydryl-alkohol, N-(3-Chlor-2,6-dinitro-4-trifluormethyl-phenyl)-5-tri-fluormethyl-3-chlor-2-aminopyridin, 1-((bis-(4-Fluorphenyl)-methylsilyl)-methyl)-1H-1,2,4-triazol.

Brauchbare Wachstumsregulatoren sind z.B. die Gruppe der Gibberelline. Dazu gehören z.B. die Gibberelline GA₁, GA₃, GA₄, GA₅ und GA₇ etc. und die entsprechenden
exo-16,17-Dihydrogibberelline sowie die Derivate davon, z.B. die Ester mit C₁-C₄-Carbonsäuren. Erfindungsgemäß bevorzugt ist das exo-16,17-Dihydro-GA₅-13-acetat.

Die erfindungsgemäßen Formulierungen können als emulgierbares Konzentrat (EC), Suspoemulsion (SE), Öl-in-Wasser-Emulsion (O/W), Wasser-in-Öl-Emulsion (W/O), wässriges Suspensionskonzentrat, Öl-Suspensionskonzentrat (SC), Mikroemulsion (ME), etc. vorliegen. Bei den Formulierungen handelt es sich um wässrige oder nichtwässrige, flüssige Formulierungen, wobei die Cyclohexanpolycarbonsäureester als Lösungsmittel für die organischen Bestandteile, insbesondere den Wirkstoff, oder als inerte Verdünnungsmittel fungieren. Wasserfreie Formulierungen haben den Vorteil, dass aufgrund des aprotischen Charakters der Cyclohexanpolycarbonsäureester auch solche Wirkstoffe eingesetzt werden können, bei denen in wässrigen Formulierungen die Gefahr eines hydrolytischen Abbaus während der Lagerung besteht.

Emulgierbare Konzentrate enthalten neben den Wirkstoffen eine Ölphase, die zumindest teilweise durch den Cyclohexanpolycarbonsäureester gebildet wird. Die Ölphase kann auch weitere Lösungsmittel und Co-Solventien wie im Zusammenhang mit den Öl-SC-Formulierungen genannt, enthalten. Weiterhin enthalten die emulgierbaren Konzentrate im Allgemeinen Emulgatoren und Hilfsstoffe, wie Stabilisierungsmittel, Entschäumer, etc. Im Allgemeinen ist der Cyclohexanpolycarbonsäureester in einer Menge von 0,1 bis 40 Gew.-%, vorzugsweise 1 bis 20 Gew.-%, bezogen auf emulgierbares Konzentrat, enthalten. Die Herstellung der emulgierbaren Konzentrate erfolgt in üblicher Weise durch homogenes Vermischen der Bestandteile. Wirkstoffe oder Hilfsmittel können gegebenenfalls als flüssige Vorkonzentrate in geeigneten Lösungsmitteln zur Anwendung kommen.

Bei wässrigen Suspensionskonzentraten ist ein wasserlöslicher Wirkstoff in hoher Konzentration in Wasser suspendiert. Sie enthalten im Allgemeinen, bezogen auf das Gesamtgewicht der Formulierung, 40 bis 80 Gew.-% Wirkstoff, 0,5 bis 2 Gew.-% Netzmittel, 2 bis 5 Gew.-% Dispergiermittel und gegebenenfalls 0,1 bis 1 Gew.-% Verdickungsmittel. Zur Herstellung wird im Allgemeinen der auf eine mittlere Teilchengröße von etwa 1 bis 5 µm vermahlene Wirkstoff in dem Gemisch der übrigen Komponenten mit Hilfe üblicher Maßnahmen dispergiert. Vor oder nach Dispergieren des Wirkstoffs werden etwa 1 bis etwa 10 Gew.-% (bezogen auf das Gesamtgewicht der Formulierung) Cyclohexanpolycarbonsäureester eingearbeitet.

Öl-SC-Formulierungen enthalten im Allgemeinen 10 bis 70 Gew.-%, insbesondere 30 bis 60 Gew.-% wenigstens eines Wirkstoffes, 10 bis 85 Gew.-%, insbesondere 20 bis 60 Gew.-% einer weitgehend wasserfreien Ölphase (bis maximal 1 Gew.-% Wasser), und 5 bis 40 Gew.-%, insbesondere 7,5 bis 25 Gew.-% mindestens eines Tensids, insbesondere eines anionischen Tensids sowie gegebenenfalls weitere Hilfsstoffe (jeweils bezogen auf das Gesamtgewicht der Formulierung). Der Wirkstoff ist dabei in feindisperser Form in der Ölphase verteilt. Die Ölphase wird zumindest zum Teil durch den Cyclohexanpolycarbonsäureester gebildet. Im Allgemeinen enthält die Ölphase 20 bis 100 Gew.-%, insbesondere 40 bis 100 Gew.-%, Cyclohexanpolycarbonsäureester. Falls die Ölphase 100 Gew.-% Cyclohexanpolycarbonsäureester enthält, kann sie zusätzlich mindestens einen der folgenden Bestandteile enthalten:
a) einen C₈- bis C₃₀-Kohlenwasserstoff der n- oder iso-Alkan-Reihe oder ein Gemisch davon. Beispiele für derartige Kohlenwasserstoffe sind n-und iso-Octan, -Decan, -Hexadecan, -Octadecan, -Eicosan, und vorzugsweise Kohlenwasserstoffgemische, wie Paraffinöl (das in technischer Qualität bis zu etwa 5% Aromaten enthalten kann) und ein C₁₈-C₂₄-Gemisch; das unter der Bezeichnung Spraytex-Öl im Handel von der Fa. Exxon erhältlich ist.
b) aromatische oder cycloaliphatische C₇- bis C₁₈-Kohlenwasserstoffverbindungen, oder ein Gemisch davon. Dazu gehören insbesondere aromatische oder cycloaliphatische Lösungsmittel aus der Alkyl-Aromatenreihe; die Verbindungen können unhydriert, teilhydriert oder vollständig hydriert sein. Zu derartigen Lösungsmitteln der Komponente b) gehören insbesondere Mono-, Di- oder Trialkylbenzole, Mono-, Di-, Trialkyl-substituierte Tetraline und/oder Mono-, Di-, Tri- oder Tetraalkylsubstituierte Naphthaline (Alkyl steht vorzugsweise für C₁-C₆-Alkyl). Beispiele derartiger Lösungsmittel sind Toluol, o-, m-, p-Xylol, Ethylbenzol, Isopropylbenzol, tert.-Butylbenzol und Gemische, wie die unter der Bezeichnung Shellsol und Solvesso vertriebenen Produkte der Fa. Exxon, z.B. Solvesso 100, 150 und 200.
c) einen aliphatischen Ester, der insbesondere ausgewählt ist aus der Gruppe, bestehend aus aliphatischen Estern, aromatisch-aliphatischen Estern, und natürlichen Fetten und Ölen und deren Derivaten und Gemischen davon. Geeignet sind Ester aliphatischer, gesättigter oder ungesättigter C₁-C₂₀-Mono- und C₂-C₂₀-Dicarbonsäuren mit C₁-C₂₀-Alkanolen und Phenyl-C₁-C₂₀-alkanolen, wobei die Gesamtzahl der Kohlenstoffatome mindestens 8 beträgt. Geeignet sind auch Ester aromatischer Mono- und Dicarbonsäuren, wie Benzoesäure und Phthalsäure, mit C₁-C₂₀-Alkanolen und Phenyl-C₁-C₂₀-alkanolen. Bevorzugt sind Methyloleat, Adipinsäure-di-n- und -isooctylester, Laurylsäureoctylester, 2-Ethylhexansäure-2-ethylhexylester, Ölsäuremethylester, Stearinsäure-n-butylester, Adipinsäure-di-n-butylester, Adipinsäure-di-n- und -isononylester, Rapsölmethyl- und - ethylester, Benzoesäure-n-butylester, Benzoesäurebenzylester, etc.

Zu den vorstehend erwähnten natürlichen bzw. naturbelassenen Fetten oder Ölen oder Derivaten davon (modifizierte natürliche Fette oder Öle) gehören z.B. Stoffe wie Sojaöl, Sonnenblumenöl, Rapsöl, Maisöl sowie deren Raffinate.

Zur Herstellung von Öl-SC-Formulierungen werden feste Wirkstoffe mit Netz- und Dispergiermitteln und gegebenenfalls weiteren Hilfs- oder Zusatzstoffen in geeigneten Vorrichtungen bis zu einer mittleren Partikelgröße von ≤ 10 µm vermahlen. Zu diesem Zweck verwendet man übliche Vorrichtungen, wie Kugelmühlen oder Rührwerkskugelmühlen mit Mahlkörpern, beispielsweise Glasmahlkörpern, mineralischen oder metallischen Mahlkörpern. Eine besonders geeignete vorrichtung ist die Dynomühle der Firma Bachofen, welche die sog. Passagenfahrweise ermöglicht. Nach in der Regel 5 Passagen (Durchpumpen des Slurries durch die Mühle mit Hilfe einer Schlauchpumpe) werden im Allgemeinen mittlere Teilchengrößen im Bereich von 1 bis 10 µm erreicht. Das Vermahlen erfolgt im Allgemeinen bei einer Temperatur im Bereich von 0 bis 30°C.

In das auf diese Weise erhaltene Öl-SC-Vorkonzentrat werden anschließend die Cyclohexanpolycarbonsäureester zusammen mit den anderen Komponenten eingerührt. Zu diesem Zweck verwendet man übliche Vorrichtungen, wie herkömmliche Mischer und Dispergatoren, insbesondere Ringspaltmühlen vom Rotor-Stator-Typ.

Der Cyclohexanpolycarbonsäureester dient im Falle von Öl-SC-Formulierungen zur Wirkungssteigerung und im Falle von wässrigen SC-Formulierungen zur Stabilisierung der Formulierung.

Suspoemulsionen enthalten sowohl einen festen als auch einen flüssigen Wirkstoff in einer wässrigen Phase dispergiert. Bei dem flüssigen Wirkstoff kann es sich auch um eine Lösung eines öllöslichen Wirkstoffes in einer Ölphase handeln. Erfindungsgemäß bildet der Cyclohexanpolycarbonsäureester zumindest einen Teil dieser Ölphase. Neben dem Cyclohexanpolycarbonsäureester kann die Ölphase auch mindestens eine der oben im Zusammenhang mit Öl-SC-Formulierungen genannten Ölkomponenten enthalten.

Suspoemulsionen enthalten, jeweils bezogen auf das Gesamtgewicht der Suspoemulsion, im Allgemeinen 30 bis 60 Gew.-% Wirkstoffe (Gesamtmenge der Wirkstoffe), 1 bis 20 Gew.-% einer Ölphase, 2 bis 10 Gew.-% Netz- und Dispergiermittel, 0,1 bis 0,5 Gew.-% Entschäumer, 0,1 bis 5 Gew.-% Verdickungsmittel und gegebenenfalls weitere Hilfsstoffe. Die Wasserphase macht den verbleibenden Teil der Formulierung aus.

Der in der Suspoemulsion in fester Form vorliegende Wirkstoff muss in der Ölphase und in der Wasserphase im Wesentlichen unlöslich sein. Der in der Ölphase gelöste Wirkstoff darf dagegen in der Wasserphase im Wesentlichen nicht löslich sein.

Suspoemulsionen werden im Allgemeinen ausgehend von den SC-Vorkonzentraten hergestellt. Dabei werden die SC-Vorkonzentrate typischerweise durch Zugabe von Verdickungsmitteln rheologisch eingestellt. Anschließend wird eine weitere Ölphase mit mindestens einem weiteren Wirkstoff eingearbeitet. Dies erfolgt in üblicher Weise, beispielsweise durch starkes Rühren oder unter Verwendung von Dissolvern oder Ringspaltmühlen.

Bei den O/W- und den W/O-Emulsionen bilden die Cyclohexanpolycarbonsäureester zumindest einen Teil der Ölphase. Derartige Emulsionen enthalten, jeweils bezogen auf das Gesamtgewicht der Emulsion im Allgemeinen 20 bis 60 Gew.-% Wirkstoff, 1 bis 10 Gew.-% Emulgatoren, 0,1 bis 0,5 Gew.-% Entschäumer, 0,1 bis 5 Gew.-% Verdickungsmittel und gegebenenfalls weitere Hilfsstoffe.

Zur Herstellung von Emulsionen (O/W-, W/O-Emulsionen oder multiple Flüssigformulierungen) werden zunächst getrennte Vorkonzentrate von wässrigen und nicht-wässrigen Phasen hergestellt. Die Viskosität der Wasserphasen wird im Allgemeinen durch Zugabe von Verdickungsmitteln erhöht. Anschließend wird die Ölphase in die Wasserphase oder die Wasserphase in die Ölphase unter starker Scherung eingearbeitet. Um die starke Scherung zu erreichen wird stark gerührt oder es werden Scherwerke, wie Rotor-Stator-Mühlen oder Lochblenden eingesetzt. Üblicherweise können auch Druckdifferentiale ausgenutzt werden, um hohe Anteile an feinteiligen Partikeln und lagerstabile Formulierungen zu erhalten.

Bei Mikroemulsionen ist eine Ölphase mit einer mittleren Teilchengröße im Bereich von 1 bis 50 nm in einer wässrigen Phase dispergiert. Die Ölphase wird zumindest zum Teil duch den Cyclohexanpolycarbonsäureester gebildet. Daneben kann die Ölphase auch die oben im Zusammenhang mit Öl-SC-Formulierungen genannten Öl-komponenten enthalten. Der Wirkstoff oder die Wirkstoffe sind in der Ölphase gelöst. Im Allgemeinen enthalten die Mikroemulsionen (jeweils bezogen auf das Gesamtgewicht) 20 bis 70 Gew.-% Ölphase (einschließlich des Wirkstoffs), 0,5 bis 30 Gew.-% Tenside, 0,1 bis 20 Gew.-% Co-Tenside, 30 bis 70 Gew.-% Wasser und gegebenenfalls weitere Hilfsstoffe. Mikroemulsionen bilden sich spontan beim Vermischen der Komponenten. Es ist jedoch zweckmäßig, die Ölphase mit den Tensiden und Co-Tensiden zu vermischen und dann die Wasserphase langsam einzumischen.

Die erfindungsgemäßen Formulierungen können im Falle von EC- und ME-Formulierungen als "stand-alone"-Produkt bereitgestellt werden, d.h. die Abgabe des Wirkstoffes (gegebenenfalls zusammen mit einem Teil der übrigen Komponenten) und der übrigen Komponenten an den Verbraucher erfolgt in separaten Verpackungen. Dies hat den Vorteil, dass die Wirkstoffmenge frei gewählt werden kann. Die erfindungsgemäßen Pflanzenschutzmittel werden vor ihrem Gebrauch vom Anwender, in der Regel dem Landwirt, in an sich bekannter Weise mit Wasser zu der fertigen Spritzbrühe verarbeitet. Insbesondere werden dazu zunächst die Teile des Kombipacks gemischt und die so erhaltene herbizide Zusammensetzung anschließend mit Wasser auf die gewünschte Konzentration verdünnt.

Die spritzfähigen Brühen enthalten normalerweise 0,0001 bis 10, vorzugsweise 0,001 bis 1, und insbesondere 0,01 bis 0,5 Gew.-% des Pflanzenschutz-Wirkstoffs und 0,001 bis 50, vorzugsweise 0,01 bis 5 und insbesondere 0,1 bis 0,5 Gew.-% der erfindungsgemäßen Mischung.

Die Applikation der Spritzbrühen kann in an sich bekannter Weise, vor allem durch Versprühen etwa mit einer fahrbaren Spritzmaschine anhand feinstverteilender Düsen erfolgen. Die hierfür weiterhin gebräuchlichen Geräte und Arbeitstechniken sind dem Fachmann bekannt.

Die erfindungsgemäßen Formulierungen besitzen den Vorteil, dass die Aufwandmengen an Wirkstoffen und Formulierungshilfsmitteln verringert sind und die Wirkung verbessert ist. Außerdem sind die Cyclohexanpolycarbonsäureester in toxikologischer Hinsicht vorteilhaft. Versuche haben gezeigt, dass sie, im Gegensatz zu herkömmlichen Polycarbonsäureestern, keine biologisch signifikante Peroxisomenproliferation zur Folge haben. Außerdem sind die Cyclohexanpolycarbonsäureester geruchsarm und geruchsneutral.

Die nachfolgenden Beispiele erläutern die Erfindung ohne sie zu Beschränken. Für die Beispiele wurde ein Cyclohexan-1,2-dicarbonsäuredi(isononyl)ester verwendet, dessen Alkoholkomponentedurch Butendimerisierung, Hydroformylierung und Hydrierung nach folgendem Verfahren erhalten wurde:

### 1) Butendimerisierung

Die Butendimerisierung wurde in einem adiabatischen Reaktor bestehend aus zwei Teilreaktoren (Länge: jeweils 4 m, Durchmesser: jeweils 80 cm) mit Zwischenkühlung bei 30 bar kontinuierlich durchgeführt. Als Einsatzprodukt wurde ein Raffinat II mit folgender Zusammensetzung verwendet:

| | |
|---|---|
| iso-Butan | 2 Gew.-% |
| n-Butan | 10 Gew.-% |
| iso-Buten | 2 Gew.-% |
| 1-Buten | 32 Gew.-% |
| trans-2-Buten | 37 Gew.-% |
| cis-2-Buten | 17 Gew.-% |

Als Katalysator diente ein Katalysator gemäß der DE-A 43 39 713, bestehend aus 50 Gew.-% NiO, 12,5 Gew.-% TiO₂, 33,5 Gew.-% SiO₂ und 4 Gew.-% Al₂O₃ in Form von 5x5 mm-Tabletten. Die Umsetzung wurde mit einem Durchsatz von 0,375 kg Raffinat II/1 Katalysator·h, einem Rückführverhältnis von unumgesetzten C₄-Kohlenwasserstoffen zu frischem Raffinat II von 3, einer Eintrittstemperatur am 1. Teilreaktor von 38°C und einer Eintrittstemperatur am 2. Teilreaktor von 60°C durchgeführt. Der Umsatz, bezogen auf die im Raffinat II enthaltenen Butene, lag bei 83,1%. Durch fraktionierte Destillation des Reaktoraustrags wurde die Octenfraktion von unumgesetztem Raffinat II und den Hochsiedern abgetrennt.

### 2) Hydroformylierung und Hydrierung

750 g des gemäß 1) hergestellten Octengemisches wurden diskontinuierlich in einem Autoklaven mit 0,13 Gew.-% Dicobaltoctäcarbonyl (CO₂(CO)₈) als Katalysator unter Zusatz von 75 g Wasser bei 185°C und unter einem Synthesegasdruck von 280 bar bei einem Mischungsverhältnis von H₂ zu CO von 60:40 5 h umgesetzt. Der Verbrauch an Synthesegas, zu erkennen an einem Druckabfall im Autoklaven, wurde durch Nachpressen ausgeglichen. Nach dem Entspannen des Autoklaven wurde der Reaktionsaustrag mit 10 gew.-%iger Essigsäure durch Einleiten von Luft oxidativ vom Cobaltkatalysator befreit, und die organische Produktphase wurde mit Raney-Nickel bei 125°C und einem Wasserstoffdruck von 280 bar 10 h lang hydriert. Durch fraktionierte Destillation des Reaktionsaustrages wurde die Isononanolfraktion von den C₈-Paraffinen und den Hochsiedern abgetrennt.

Die Zusammensetzung der Isononanolfraktion wurde mittels Gaschromatographie analysiert. Eine Probe wurde zuvor mit 1 ml N-Methyl-N-trimethylsilyltrifluoracetamid pro 100 µl Probe 60 min bei 80°C trimethylsilyliert. Zum Einsatz kam eine Trennsäule vom Typ Hewlwtt Packard Ultra 1 von 50 m Länge, einem Innendurchmesser von 0,32 mm bei einer Filmdicke von 0,2 µm. Injektor- und Detektortemperatur waren 250°C, die Ofentemperatur betrug 120°C. Der Split war 110 ml/min. Als Trägergas diente Stickstoff. Der Vordruck war auf 200 kPa eingestellt. Es wurde 1 µl der Probe eingespritzt und mittels FID detektiert. Folgende Probenzusammensetzung (gaschromatographische Flächenprozente) wurde so ermittelt:

| | |
|---|---|
| 11,0% | 1-Nonanol |
| 20,8% | 6-Methyl-1-octanal |
| 20,5% | 4-Methyl-1-octanol |
| 5,3% | 2-Methyl-1-octanol |
| 11,0% | 2,5-Dimethyl-1-heptanol |
| 8,7% | 3-Ethyl-1-heptanol |
| 6,2% | 4,5-Dimethyl-1-heptanol |
| 2,9% | 2-Ethyl-1-heptanol |
| 2,8% | 2,3-Dimethyl-1-heptanol |
| 3,0% | 2-Ethyl-4-methyl-1-hexanol |
| 2,7% | 2-Propyl-1-hexanol |
| 1,6% | 3-Ethyl-4-methyl-1-hexanol |
| Rest zu 100% | Sonstige Alkanole mit 9 Kohlenstoffatomen. |

Die Dichte dieses Nonanol-Gemisches wurde bei 20°C zu. 0,8326 und der Brechungsindes n_{D}²⁰ zu 1,4353 gemessen. Der Siedebereich lag bei Normaldruck bei 204 bis 209°C.

### Beispiel 1

### Herstellung eines wässrigen Suspensionskonzentrates

Man vermischt 300 g Wasser, 80 g Propylenglycol, 25 g Wettol D1 (Natriumsalz eines Kondensationsproduktes aus Phenolsulfonsäure, Harnstoff und Formaldehyd; BASF AG), 50 g Pluronic PE 10500 (Propylenoxid-Ethylenoxid-Blockpolymer; BASF AG) und 500 g Epoxiconazol. Das Gemisch wird über eine Rührwerkskugelmühle vermahlen, bis 80%. der Teilchen eine Größe von < 2 µm haben. Anschließend werden 1 g Silicon SRE (Entschäumer; Wacker Chemie), 1 g Kathon MK (Konservierungsmittel auf Basis von 4-Isothiazolin-3-on; Rohm & Haas) und 2,5 g Xanthangum zugegeben. Man ergänzt mit Wasser auf 1000 ml, rührt noch 3 h und siebt über ein 150 µm-Sieb. Man erhält so ein Prämix-Konzentrat mit 500 g/l Epoxiconazol.

Zu 250 ml dieses Konzentrates gibt man 390 ml Wasser und fügt unter Rühren eine Mischung von 250 g des obigen Cyclohexandicarbonsäureesters zusammen mit 10 g Atlox 4914 (Polyoxyethylenalkylether; Uniquema) und 20 g Atlas G500 (modifiziertes Polyester-Surfactant; Uniquema) hinzu. Durch Passage über eine Rotor-Stator-Mühle (PUC-Mühle) wird eine vollständige Emulgierung der organischen Phase erreicht. 100% der Teilchen der so hergestellten Dispersion haben eine Größe von < 16 µm. Die Dispersion ist lagerstabil (4-wöchiger Schnelllagerungstest bei 50°C).

### Beispiel 2

### Herstellung eines Suspensionskonzentrates

Analog zu Beispiel 1 gibt man zu 250 ml des Prämix-Konzentrates 1280 ml Wasser und ein Gemisch aus 167 g des obigen Cyclohexandicarbonsäureesters, 250 g Ethylenoxid-Propylenoxid-Blockcopolymer (Pluronic 6400; BASF AG), 10 g Atlox 4914 und 20 g Atlas G5000. Die Komponenten werden durch Rühren vermischt und die erhaltene Dispersion wird durch Passage durch eine Rotor-Stator-Mühle (PUC-Mühle) homogenisiert. 100% der Teilchen der erhaltenen Dispersion haben eine Größe von < 9 µm. Die Dispersion ist lagerstabil (4-wöchiger Schnelllagerungstest bei 50°C).

### Beispiel 3

### Herstellung einer Suspoemulsion

Man vermischt 250 g Fenpropimorph, 67 g Ethylenoxid-Propylenoxid-Blockcopolymer (Pluronic 10500; BASF AG) und 30 g des obigen Cyclohexandicarbonsäureesters. Das Gemisch wird zusammen mit 264 ml des Prämix-Konzentrates gemäß Beispiel 1), 430 ml Wasser, 15 g Wettol D1 und 10 g Pluronic PE10500 gerührt. Nach einmaligem Durchlauf durch eine Rotor-Stator-Mühle (PUC-Mühle) erhält man eine stabile Suspoemulsion (4-wöchiger Schnelllagerungstest bei 50°C).

## Patentansprüche

1. Agrotechnische Formulierung, enthaltend, jeweils bezogen auf das Gesamtgewicht der Formulierung,
a) 20 bis 99,9 Gew.-% mindestens eines Cyclohexanpolycarbonsäureestere der Formel I 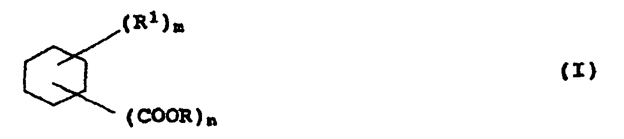 worin
R¹ für C₁-C₁₀-Alkyl oder C₃-C₈-Cycloalkyl steht;
m für 0, 1, 2 oder 3 steht,
n für 2, 3 oder 4 steht; und
R für H oder C₁-C₃₀- Alkyl steht, wobei mindestens ein Rest R für C₁-C₃₀-Alkyl steht;
b) 0 bis 70 Gew.-% Wasser;
c) 0,1 bis 60 Gew.-% mindestens eines Hilfs- und/oder Zusatzstoffes; und
d) 2 bis 70 Gew.-% mindestens eines Wirkstoffes zur Pflanzenbehandlung,
mit der Maßgabe, dass Produkte, die durch Reaktion eines Öls oder Fetts auf Basis eines Triglycerids von Carbonsäuren mit 2 bis 30 Kohlenstoffatomen mit Ethylenoxid und/oder Propylenoxid in Gegenwart von Base erhältlich sind, nicht in der Formulierung enthalten sind.

2. Agrotechnische Formulierung, enthaltend, jeweils bezogen auf das Gesamtgewicht der Formulierung,
a) 20 bis 99,9 Gew.-% mindestens eines Cyclohexanpolycarbonsäureesters der Formel I 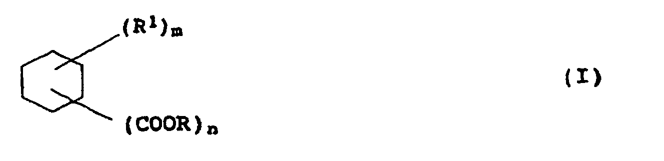 worin
R¹ für C₁-C₁₀-Alkyl oder C₃-C₈-Cycloalkyl steht;
m für 0, 1, 2 oder 3 steht;
n für 2, 3 oder 4 steht; und
R für H oder C₁-C₃₀-Alkyl. steht, wobei mindestens ein Rest R für C₁-C₃₀-Alkyl steht;
b) 0 bis 70 Gew.-% Wasser;
c) 0,1 bis 60 Gew.-% mindestens eines Hilfs- und/oder Zusatzstoffes, wobei nichtionische Tenside ausgewählt sind unter Glycerinestern, Fettalkoholalkoxylaten und Oxoalkoholalkoxylaten, Alkylphenalalkoxylaten; Fettaminalkoxylatert, Fettsäureamidalkoxylaten, Zuckertensiden, Polyoxyethylensorbitanfettsäureestern, Alkylpolyglycosiden, N-Alkygluconamiden, Alkylmethylsulfoxiden und Alkyldimethylphosphinoxiden; und
d) 2 bis 70 Gew,-% mindestens eines Wirkstoffes zur Pflanzenbehandlung.

3. Formulierung nach Anspruch 1 oder 2, die 16 bis 70 Gew.-% Wasser enthält.

4. Formulierung nach einem der Ansprüche 1 bis 3, wobei der Cyclohexanpolyoarbonsäureester ausgewählt ist unter kernhydrierten Mono- und Di-C₁-C₃₀-alkylestern der Phthalsäure, Isophthalsäure und Terephthalsäure, kernhydrierten Mono-, Diund Tri-C₁-C₃₀-alkylestern der Trimellitsäure, Trimesinsäure und Hemimellitsäure und kernhydrierten Mono-, Di-, Tri- und Tetra-C₁-C₃₀-alkylestern der Pyromellitsäure.

5. Formulierung nach Anspruch 4, wobei der Cyclohexanpolycarbonsäureester ausgewählt ist unter:
Cyclohexan-1,2-dicarbonsäuredi(isopentyl)ester, erhältlich durch Hydrierung von Di(isopentyl)phthalat mit der Chemical Abstracts Registry-Nummer (im folgenden: CAS Nr.) 84777-06-0;
Cyclohexan-1,2-dicarbonsäuredi(isoheptyl)ester, erhältlich durch Hydrierung von Di(isoheptyl)phthalat mit der CAS Nr. 71888-89-6;
Cyclohexan-1,2-dicarbonsäuredi(isononyl)ester, erhältlich durch Hydrierung eines Di(isononyl)phthalats mit der CAS Nr. 68515-48-0;
Cyclohexan-1,2-dicarbonsäuredi(isononyl)ester, erhältlich durch Hydrierung eines Di(isononyl)phthalats mit der CAS Nr. 28553-12-0, basierend auf n-Buten;
Cyclohexan-1,2-dicarbonsäuredi(isononyl)ester, erhältlich durch Hydrierung eines Di(isononyl)phthalats mit der CAS Nr. 28553-12-0, basierend auf Isobuten;
ein 1,2-Di-C₉-Ester der Cyclohexandicarbonsäure, erhältlich durch Hydrierung eines Di(nonyl)phthalats mit der CAS Nr. 68515-46-8;
ein Cyclohexan-1,2-dicarbonsäuredi(Isodecyl)ester erhältlich durch Hydrierung eines Di(isodecyl)phthalats mit der CAS Nr. 68515-49-1;
ein 1,2-Di-C₇₋₁₁-Ester der Cyclohexandicarbonsäure, erhältlich durch Hydrierung des entsprechenden Phthalsäureesters mit der CAS Nr. 68515-42-4;
ein 1,2-Di-C₇₋₁₁-Ester der Cyclohexandicarbonsäure, erhältlich durch Hydrierung der Di-C₇₋₁₁-Phthalate mit folgenden CAS Nr.: 111 381-89-6, 111 381 90-9, 111 381 91-0, 6.8515-44-6, 68515-45-7 und 3648-20-7;
ein 1,2-Di-C₉₋₁₁-Ester der Cyclohexandicarbonsäure, erhältlich durch Hydrierung eines Di-C₉₋₁₁-Phthalats mit der CAS Nr. 98515-43-5;
ein 1,2-Di(isodecyl)cyclohexandicarbonsäuresster, erhältlich durch Hydrierung eines Di(isodecyl)phthalats, das hauptsächlich aus Di-(2-propylheptyl)phthalat besteht;
ein 1,2-Di-C₇₋₉-Cyclohexandicarbonsäureester, erhältlich durch Hydrierung des entsprechenden Phthalsäureesters, der verzweigtkettige oder lineare C₇₋₉-Alkylestergruppen aufweist.

6. Formulierung nach Anspruch 4, die als Cyclohexanpolycarbonsäureester einen Cyclohexan-1,2-dicarbonsäuredi(isononyl)ester enthält.

7. Verwendung eines Cyclohexan-1,2-dicarbonsäuredi(isononyl)-esters in agrotechnischen Formulierungen.

## Claims

1. An agrotechnical formulation comprising, in each case based on the total weight of the formulation,
a) 20 to 99.9% by weight of at least one cyclohexanepolycarboxylic ester of the formula I 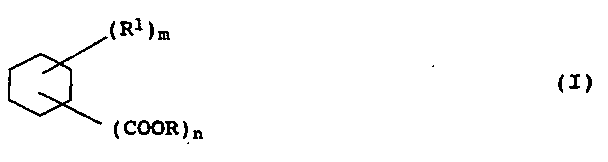 in which
R¹ is C₁-C₁₀-alkyl or C₃-C₈-cycloalkyl;
m is 0, 1, 2 or 3; and
n is 2, 3 or 4; and
R is H or C₁-C₃₀-alkyl, where at least one radical R is C₁-C₃₀-alkyl;
b) 0 to 70% by weight of water;
c) 0.1 to 60% by weight of at least one adjuvant and/or additive; and
d) 2 to 70% by weight of at least one active ingredient for plant treatment,
with the proviso that products obtainable by reacting an oil or fat based on a triglyceride of carboxylic acids having 2 to 30 carbon atoms with ethylene oxide and/or propylene oxide in the presence of bases are not present in the formulation.

2. An agrotechnical formulation comprising, in each case based on the total weight of the formulation,
a) 20 to 99.9% by weight of at least one cyclohexanepolycarboxylic ester of the formula I 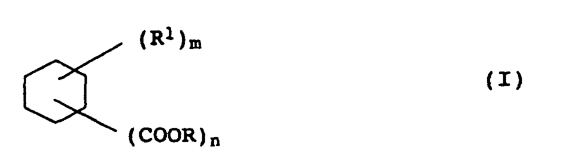 in which
R¹ is C₁-C₁₀-alkyl or C₃-C₈-cycloalkyl;
m is 0, 1, 2 or 3;
n is 2, 3 or 4; and
R is H or C₁-C₃₀-alkyl, where at least one radical R is C₁-C₃₀-alkyl;
b) 0 to 70% by weight of water;
c) 0.1 to 60% by weight of at least one adjuvant and/or additive, where non-ionic surfactants are selected from among glycerol esters, fatty alcohol alkoxylates and oxo-alcohol alkoxylates, alkylphenolalkoxylates; fatty aminealkoxylates, fatty acid amide alkoxylates, sugar surfactants, polyoxyethylene sorbitan fatty acid esters, alkyl polyglycosides, N-alkylgluconamides, alkylmethyl sulfoxides and alkyldimethylphosphine oxides; and
d) 2 to 70% by weight of at least one active ingredient for plant treatment.

3. A formulation as claimed in claim 1 or 2, comprising 16 to 70% by weight of water.

4. A formulation as claimed in any of claims 1 to 3, where the cyclohexanepolycarboxylic ester is selected from among ring-hydrogenated mono- and di-C₁-C₃₀-alkyl esters of phthalic acid, isophthalic acid and terephthalic acid, ring-hydrogenated mono-, di- and tri-C₁-C₃₀-alkyl esters of trimellitic acid, trimesic acid and hemimellitic acid, and ring-hydrogenated mono-, di-, tri- and tetra-C₁-C₃₀-alky esters of pyromellitic acid.

5. A formulation as claimed in claim 4, where the cyclohexanepolycarboxylic ester is selected from among:
Di(isopentyl) cyclohexane-1,2-dicarboxylate, obtainable by hydrogenating di(isopentyl)phthalate with the Chemical Abstracts Registry Number (hereinbelow: CAS No.) 84777-06-0;.
Di(isoheptyl) cyclohexane-1,2-dicarboxylate, obtainable by hydrogenating di(isoheptyl)phthalate with the CAS No. 71888-89-6;
Di(isononyl) cyclohexane-1,2-dicarboxylate, obtainable by hydrogenating a di(isononyl)phthalate with the CAS No. 68515-48-0;
Di(isononyl) cyclohexane-1,2-dicarboxylate, obtainable by hydrogenating an n-butene-based di(isononyl)phthalate with the CAS No. 28553-12-0;
Di(isononyl) cyclohexane-1,2-dicarboxylate, obtainable by hydrogenating an isobutene-based di(isononyl)phthalate with the CAS No. 28553-12-0;
a 1,2-di-C₉-alkylester of cyclohexanedicarboxylic acid, obtainable by hydrogenating a di(nonyl)phthalate with the CAS No. 68515-46-8;
a di(isodecyl) cyclohexane-1,2-dicarboxylate, obtainable by hydrogenating a di(isodecyl)phthalate with the CAS No. 68515-49-1;
a 1,2-di-C₇₋₁₁-alkylester of cyclohexanedicarboxylic acid, obtainable by hydrogenating the corresponding phthalic ester with the CAS No. 68515-42-4;
a 1,2-di-C₇₋₁₁-alkylester of cyclohexanedicarboxylic acid, obtainable by hydrogenating the di-C₇₋₁₁-phthalates with the following CAS Nos.: 111 381-89-6, 111 381 90-9, 111 381 91-0, 68515-44-6, 68515-45-7 and 3648-20-7;
a 1,2-di-C₉₋₁₁-alkylester of cyclohexanedicarboxylic acid, obtainable by hydrogenating a di-C₉₋₁₁-phthalate with the CAS No. 98515-43-5;
a 1,2-di(isodecyl)cyclohexanedicarboxylate, obtainable by hydrogenating a di (isodecyl) phthalate, which is mainly composed of di-(2-propylheptyl)phthalate;
a 1,2-di-C₇₋₉-cyclohexanedicarboxylate, obtainable by hydrogenating the corresponding phthalic ester, which has branched or linear C₇₋₉-alkyl ester groups.

6. A formulation as claimed in claim 4, comprising, as cyclohexanepolycarboxylic ester, a di(isononyl) cyclohexane-1,2-dicarboxylate.

7. The use of a di(isononyl) cyclohexane-1,2-dicarboxylate in agrotechnical formulations.

## Revendications

1. Formulation agrotechnique contenant, chaque fois rapportés au poids total de la formulation
a) à concurrence de 20 à 99,9 % en poids, au moins un ester d'acide cyclohexanepolycarboxylique répondant à la formule I 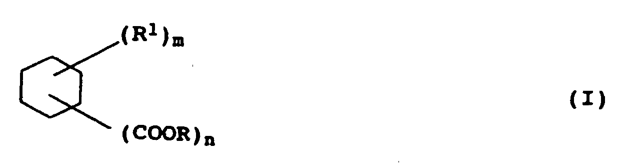 dans laquelle
R¹ représente un groupe alkyle en C₁-C₁₀ ou un groupe cycloalkyle en C₃-C₈ ;
m représente 0, 1, 2 ou 3 ;
n représente 2, 3 ou 4 ; et
R représente un atome d'hydrogène ou un groupe alkyle en C₁-C₃₀, au moins un radical R représentant un groupe alkyle en C₁-C₃₀ ;
b) à concurrence de 0 à 70 % en poids, de l'eau ;
c) à concurrence de 0,1 à 60 % en poids, au moins un adjuvant et/ou un additif ; et
d) à concurrence de 2 à 70 % en poids, au moins une substance active pour le traitement des plantes; avec cette mesure que des produits que l'on obtient par réaction d'une huile ou d'une graisse à base de triglycérides d'acides carboxyliques contenant de 2 à 30 atomes de carbone avec de l'oxyde d'éthylène et/ou de l'oxyde de propylène en présence d'une base, ne sont pas contenus dans la formulation.

2. Formulation agrotechnique contenant, chaque fois rapportés au poids total de la formulation
a) à concurrence de 20 à 99,9 % en poids, au moins un ester d'acide cyclohexanepolycarboxylique répondant à la formule I 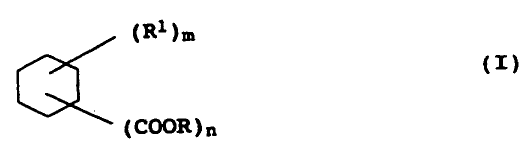 dans laquelle
R¹ représente un groupe alkyle en C₁-C₁₀ ou un groupe cycloalkyle en C₃-C₈ ;
m représente 0, 1, 2 ou 3 ;
n représente 2, 3 ou 4 ; et
R représente un atome d'hydrogène ou un groupe alkyle en C₁-C₃₀, au moins un radical R représentant un groupe alkyle en C₁-C₃₀ ;
b) à concurrence de 0 à 70 % en poids, de l'eau ;
c) à concurrence de 0,1 à 60 % en poids, au moins un adjuvant et/ou un additif ; des agents tensioactifs non ioniques étant choisis parmi le groupe comprenant des esters de glycérol, des alcoxylates d'alcools gras et des alcoxylates d'oxoalcools, des alcoxylates d'alkylphénols ; des alcoxylates d'amines grasses, des alcoxylates d'amides d'acides gras, des agents tensioactifs à base de sucre, des esters d'acides gras de polyoxyéthylène-sorbitanne, des alkylpolyglycosides, des N-alkylgluconamides, des alkylméthylsulfoxydes et des oxydes d'alkyldiméthyl-phosphines ; et
d) à concurrence de 2 à 70 % en poids, au moins une substance active pour le traitement des plantes.

3. Formulation selon la revendication 1 ou 2, qui contient de l'eau à concurrence de 16 à 70 % en poids.

4. Formulation selon l'une quelconque des revendications 1 à 3, dans laquelle l'ester d'acide cyclohexanepolycarboxylique est choisi parmi le groupe comprenant des esters monoalkyliques et dialkyliques en C₁-C₃₀ de l'acide phtalique, de l'acide isophtalique et de l'acide téréphtalique, des esters monoalkyliques, dialkyliques et trialkyliques en C₁-C₃₀ de l'acide trimellitique, de l'acide trimésique et de l'acide hémi-mellitique et des esters d'acide monoalkyliques, dialkyliques, trialkyliques et tétra-alkyliques en C₁-C₃₀ de l'acide pyromellitique, hydrogénés au noyau.

5. Formulation selon la revendication 4, dans laquelle l'ester de l'acide cyclohexanepolycarboxylique est choisi parmi le groupe comprenant :
le di(isopentyl)ester de l'acide cyclohexane-1,2-dicarboxylique, que l'on obtient par hydrogénation du di(isopentyl)phtalate portant le numéro de Chemical Abstracts Registry (ci-après : n° CAS) 84777-06-0 ;
le di(isoheptyl)ester de l'acide cyclohexane-1,2-dicarboxylique, que l'on obtient par hydrogénation du di(isoheptyl)phtalate portant le n° CAS 71888-89-6 ;
le di(isononyl)ester de l'acide cyclohexane-1,2-dicarboxylique, que l'on obtient par hydrogénation d'un di(isononyl)phtalate portant le le n° CAS 68515-48-0 ;
le di(isononyl)ester de l'acide cyclohexane-1,2-dicarboxylique, que l'on obtient par hydrogénation d'un di(isononyl)phtalate portant le n° CAS 28553-12-0 à base de n-butène ;
le di(isononyl)ester de l'acide cyclohexane-1,2-dicarboxylique, que l'on obtient par hydrogénation d'un di(isononyl)phtalate portant le n° CAS 28553-12-0 à base d'isobutène ;
un 1,2-diester alkylique en C₉ de l'acide cyclohexane dicarboxylique, que l'on obtient par hydrogénation d'un di(nonyl)phtalate portant le n° CAS 68515-46-8 ;
un di(isodécyl)ester de l'acide cyclohexane-1,2-dicarboxylique que l'on obtient par hydrogénation d'un di(isodécyl)phtalate portant le n° CAS 68515-49-1 ;
un 1,2-diester alkylique en C₇-C₁₁ de l'acide cyclohexanedicarboxylique que l'on obtient par hydrogénation de l'ester phtalique correspondant portant le n° CAS 68515-42-4 ;
un 1,2-diester alkylique en C₇-C₁₁ de l'acide cyclohexanedicarboxylique que l'on obtient par hydrogénation des diphtalates en C₇-C₁₁ correspondants portant les n° CAS ci-après : 111 381-89-6, 111 381 90-9, 111 381 91-0, 68515-44-6, 68515-45-7 et 3648-20-7 ;
un 1,2-diester alkylique en C₉₋C₁₁ de l'acide cyclohexanedicarboxylique que l'on obtient par hydrogénation d'un diphtalate en C₉₋C₁₁ portant le n° CAS 98515-43-5 ;
un ester 1,2-di(isodécyl)cyclohexanedicarboxylique, que l'on obtient par hydrogénation d'un di(isodécyl)phtalate qui est constitué principalement par le di-(2-propylheptyl)phtalate ;
un 1,2-diester en C₇-C₉ de l'acide cyclohexanedicarboxylique, que l'on obtient par hydrogénation de l'ester phtalique correspondant qui présente des groupes esters alkyliques en C₇-C₉ à chaînes ramifiées ou linéaires.

6. Formulation selon la revendication 4, qui contient, à titre d'ester de l'acide cyclohexanepolycarboxylique, un di(isononyl)ester de l'acide cyclohexane-1,2-dicarboxylique.

7. Utilisation d'un di(isononyl)ester de l'acide cyclohexane-1,2-dicarboxylique dans des formulations agrotechniques.
